# EUROPEAN PATENT SPECIFICATION

(11) **EP 4 289 855 B1**
(45) Date of publication and mention of the grant of the patent: **27.11.2024**
(21) Application number: 22755062.1
(22) Date of filing: 29.06.2022
(51) Int. Cl.: C07F 9/145, C07F 9/572, C07F 9/6506, C07F 9/6584

(54) **METHOD FOR PREPARING PHOSPHORUS-CONTAINING LIGAND**
VERFAHREN ZUR HERSTELLUNG EINES PHOSPHORHALTIGEN LIGANDEN
PROCÉDÉ DE PRÉPARATION D'UN LIGAND CONTENANT DU PHOSPHORE

(30) Priority: 26.04.2022 CN 202210445344
(43) Date of publication of application: 13.12.2023
(73) Proprietor: Zhejiang NHU Company Ltd., Shaoxing, Zhejiang 312500 (CN); Zhejiang NHU Special Materials Co., Ltd., Shaoxing, Zhejiang 312369 (CN); Zhejiang NHU Nylon Materials Co., Ltd., Shaoxing, Zhejiang 312369 (CN)
(72) Inventor: ZHA, Zengshi, Shaoxing, Zhejiang 312500 (CN); CHEN, Zhirong, Hangzhou, Zhejiang 310058 (CN); WU, Wenbin, Shaoxing, Zhejiang 312500 (CN); ZHANG, Tinglan, Shaoxing, Zhejiang 312500 (CN); YIN, Hong, Hangzhou, Zhejiang 310058 (CN); WANG, Keyan, Shaoxing, Zhejiang 312369 (CN); ZHOU, Litao, Shaoxing, Zhejiang 312500 (CN); LI, Haoran, Hangzhou, Zhejiang 310058 (CN); HUANG, Guodong, Shaoxing, Zhejiang 312500 (CN); XU, Yong, Shaoxing, Zhejiang 312369 (CN)
(74) Representative: Meyer-Dulheuer MD Legal Patentanwälte PartG mbB
(86) International application number: PCT/CN2022/102172
(87) International publication number: WO 2023/206791

(56) References cited:
- WO-A1-2005/063776
- CN-A- 101 250 200
- CN-A- 102 875 599
- CN-A- 110 961 055
- CN-A- 111 533 767
- CN-A- 114 075 245

## Description

### TECHNICAL FIELD

The present disclosure relates to a technical field of a method for preparing a phosphorus-containing ligand.

### BACKGROUND

Phosphite ester compounds are known in the art as catalytic systems associated with hydrocyanation of alkenes. In related technologies, phosphite compounds are usually prepared by purging R-OH and phosphorus chloride compounds with an inert gas or adding an organic base acid binding agent to the R-OH and the phosphorus chloride compounds.

During a process for preparing a bidentate phosphorus-containing ligand and a multidentate phosphorus-containing ligand in the related art, a liquid amine compound is normally added as an acid binding agent to react with a generated hydrogen chloride to generate an ammonium hydrochloride. After a reaction is finished, a target product is purified by filtration, removal of solvent, and column chromatography. However, the method in related art generally has problems such as a large consumption amount of acid binding agent, an excessively high viscosity of the reaction system, a difficult post-processing of the acid binding agent, and a complicated recycling procedure, which increase a cost of wastes treatment.

WO 2005/063776 A1 discloses that a method for producing organophosphites, organophosphonites and organophosphinites by the condensation of phosphorus trihalides or organophosphorus halides with organic compounds that carry hydroxy groups, in the presence of polymeric alkaline ion-exchange resins; the inventive method permits the production of trivalent organophosphorus compounds, which can be used e.g. as ligands in rhodium complexes that can be utilised as a catalyst in hydroformylation.

Therefore, how to solve problems such as a high salt content, a high viscosity and a difficult post-processing of a system after using the acid binding agent in a process for preparing phosphorus-containing ligand compounds, and how to solve problems of a low selectivity and a low conversion rate in the process for preparing phosphorus-containing ligand compounds are challenges in the art. Meanwhile, for some phosphorus-containing ligand compounds including sensitive groups (such as double bonds, etc.), it is also an urgent need in the art to prepare them by faster methods under milder conditions.

### SUMMARY

Details of one or more embodiments of the present disclosure are set forth in the following description. Other features, objects and advantages of the present disclosure will become apparent from the specification and the claims.

In some embodiments of the present disclosure, a method for preparing a phosphorus-containing ligand is provided. In the method, polypyridine ionic liquid-loaded porous microspheres are employed as catalysts and hydrogen chloride produced by the reaction are removed from a reaction device, so that the method may have an excellent reaction selectivity and an excellent yield.

A method for preparing a phosphorus-containing ligand includes the following steps:
mixing a phosphorus chloride compound as shown in Formula (1), first polypyridine ionic liquid-loaded porous microspheres with a first organic solvent to obtain a first mixture, and mixing a compound as shown in Formula (2) with a second organic solvent to obtain a second mixture; and
mixing the first mixture with the second mixture in a reaction device to make the first mixture react with the second mixture to obtain a reaction mixture, removing generated hydrogen chloride from the reaction device, filtrating the reaction mixture to obtain a filter liquor after a reaction of the first mixture and the second mixture, and treating the filter liquor to obtain the phosphorus-containing ligand, 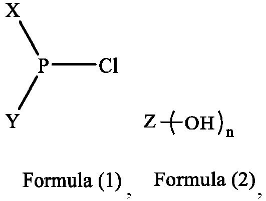
wherein in Formula (1), X and Y are independently selected from substituted aryloxy groups or nitrogen-containing heterocyclic groups,
in Formula (2), Z is a multivalent aliphatic hydrocarbon group or a multivalent aromatic hydrocarbon group including at least one substituent group,
wherein the at least one substituent group is selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, and n is an integer in a range of 1 to 8.

In an embodiment, the first polypyridine ionic liquid-loaded porous microspheres includes a polypyridine ionic liquid, and a structural formula of the polypyridine ionic liquid is shown in Formula (3), 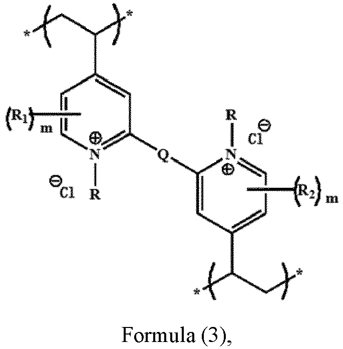 in Formula (3), R is selected from a C₁-C₁₀ linear chain alkyl group or a C₁-C₁₀ branched chain alkyl group, wherein R₁ and R₂ is independently selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, m is an integer in a range of 0 to 3, and Q is a direct bond or a divalent linking group.

In an embodiment, Q is selected from 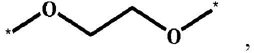 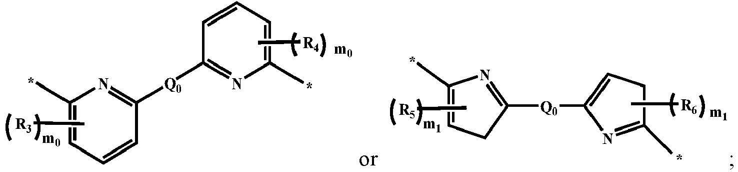 wherein R₃, R₄, R₅, and R₆ are independently selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, wherein Q₀ is selected from a direct bond or a divalent linking group, m₀ is an integer in a range of 0 to 3, and m₁ is an integer in a range of 0 to 2.

In an embodiment, Q₀ is selected from 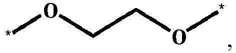 **-(CH₂)n₁-**, **-(CH₂O)n₂-**, substituted aryl group, or unsubstituted aryl group, and n₁ and n₂ are independently selected from integers in a range of 1 to 50.

In an embodiment, the first polypyridine ionic liquid-loaded porous microspheres includes polystyrene porous microspheres, particle sizes of the polystyrene microspheres are in a range of 50 nm to 100 nm, and a relative deviation of the particle sizes is less than 3%.

In an embodiment, a BET specific surface area of the first polypyridine ionic liquid-loaded porous microspheres is in a range of 50m²/g to 500m²/g, and an average aperture size of apertures in the first polypyridine ionic liquid-loaded porous microspheres is in a range of 10 nm to 50 nm.

In an embodiment in Formula (1), a structural formula of the substituted aryloxy groups is 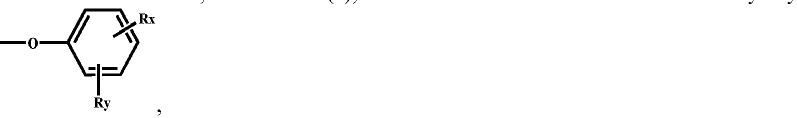 wherein Rx and Ry are independently selected from hydrogen atom, halogen atom, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

In an embodiment, when both X and Y are selected from 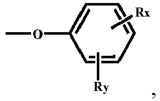 X and Y are not cyclized. In an embodiment, when both X and Y are selected from nitrogen-containing heterocyclic groups, X and Y are not cyclized, or X and Y are cyclized via a single bond or methylene. In an embodiment, when X is selected from 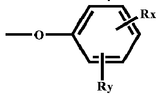 and Y is selected from nitrogen-containing heterocyclic groups, X and Y are cyclized via methylene.

In an embodiment, the nitrogen-containing heterocyclic groups are selected from 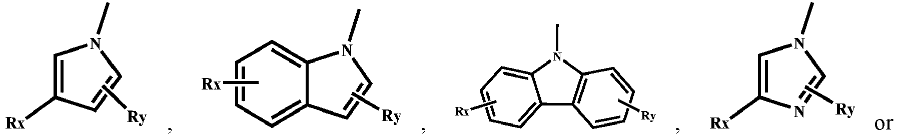 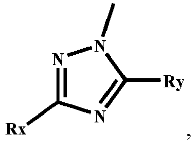 wherein Rx and Ry are independently selected from hydrogen atom, halogen atom, nitrile group, C₁-C₁₀ alkyl group, C₁-C₁₀ alkoxy group, C₁-C₁₀ alkanoyl group, C₁-C₁₀ ester group, Ci-Cio sulfonate group, vinyl group, propenyl group, acryloyl group, acrylate group, or methacryloyl group.

In an embodiment, both X and Y are selected from nitrogen-containing heterocyclic groups, and X and Y are cyclized via the single bond or the methylene to form a structure selected from the group consisting of

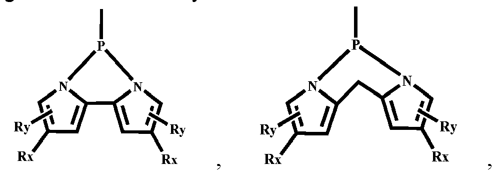

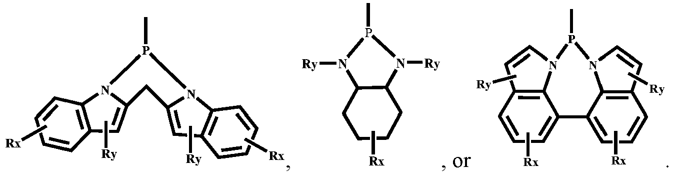

In an embodiment, in Formula (2), Z is selected from 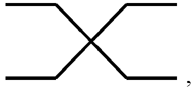 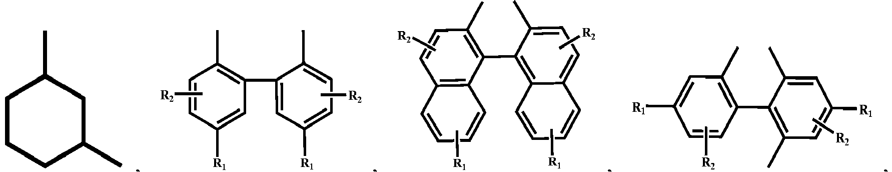 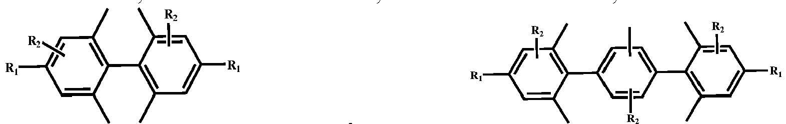 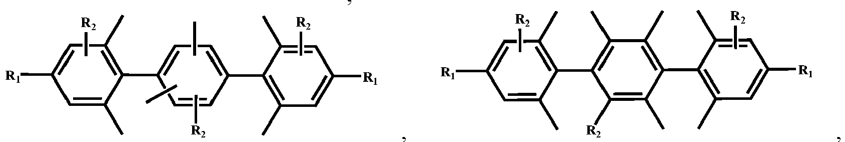 or 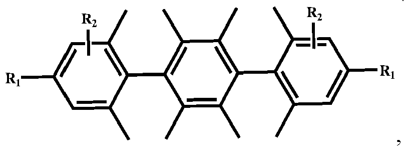 wherein R₁ and R₂ are independently selected from hydrogen atom, halogen atom, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

In an embodiment, in Formula (2), n is an integer in a range of 2 to 4.

In an embodiment, in the step of mixing the first mixture with the second mixture in the reaction device to obtain the reaction mixture, a molar ratio of the phosphorus chloride compound to the compound as shown in Formula (2) is in a range of 1.0:(1/x) to 1. 3: (1 /x), x is equal to n in Formula (2), and a molar ratio of nitrogen atoms in the first polypyridine ionic liquid-loaded porous microspheres to hydroxyl groups in the compound as shown in Formula (2) is in a range of 0.01:1 to 0.1:1.

In an embodiment, a molar concentration of the phosphorus chloride compound in the first mixture is in a range of 0.05 mol/L to 5.0 mol/L, and a molar concentration of the compound as shown in Formula (2) in the second mixture is in a range of 0.05 mol/L to 5.0 mol/L.

In an embodiment, in the step of mixing the first mixture with the second mixture in the reaction device to make the first mixture react with the second mixture to obtain the reaction mixture, a reaction temperature is in a range of 0 to 50 degrees centigrade, and a reaction time is in a range of 1 hour to 5 hours.

In an embodiment, in the step of mixing the first mixture with the second mixture in the reaction device to make the first mixture react with the second mixture to obtain the reaction mixture, the second mixture is added into the first mixture in batches.

In an embodiment, in the step of adding the second mixture into the first mixture in batches, an adding duration is in a range of 2 hours to 10 hours.

In an embodiment, the step of filtrating the reaction mixture to obtain the filter liquor after the reaction further includes recovering second polypyridine ionic liquid-loaded porous microspheres.

In an embodiment, after the recovering the second polypyridine ionic liquid-loaded porous microspheres, the recovered second polypyridine ionic liquid-loaded porous microspheres are washed, dried and re-used for preparing the first mixture.

In an embodiment, the step of mixing the first mixture with the second mixture in the reaction device to make the first mixture react with the second mixture to obtain the reaction mixture further includes blowing a protective gas in to the reaction device to remove the generated hydrogen chloride out from the reaction device, so as to co-produce hydrogen chloride.

### DETAILED DESCRIPTION

In Chinese patent No. CN101250200A, a synthetic method of bis(2,4-di-tert-butylphenyl) pentaerythritol diphosphate ester was provided. In the synthetic method, nitrogen gas was introduced to reactants and stirred, and hydrogen chloride generated in the reaction was absorbed by a sodium hydroxide solution. In Chinese patent No. CN106220681A, a method for preparing a phosphite ester antioxidant was provided. In the method, a slight positive pressure of a system was maintained during a reaction, and generated hydrogen chloride was completely discharged into a hydrogen chloride absorption system to generate hydrochloric acid.

In Chinese patent No. CN102875599A, a method for preparing tridentate phosphorus-containing ligands was provided. In the method, 2, 2', 6-trihydroxybiphenyl was reacted with dipyrrole phosphorus chloride in the presence of an anhydrous triethylamine, and after a reaction was completed, a triethylamine hydrochloride was filtered, and a target product with a yield of 64% was obtained by removal of solvent, a crude purification through column chromatography and a recrystallization using methanol. Chinese patent No. CN101331144B disclosed a method for preparing a tetradentate phosphorus ligand. In the method, 2, 2', 6, 6'-tetrahydroxy-1, 1'-biphenyl was reacted with dipyrrole phosphorus chloride in the presence of an anhydrous triethylamine, and after a reaction was completed, a target product with a yield of 36% was obtained by a filtration, a removal of solvent, and column chromatography.

Chinese patent No. CN100441584C disclosed a method for preparing a pentaerythritol phosphite ester antioxidant. In the method, pentaerythritol, a solvent, phosphorus trichloride, and 2, 6-di-tertbutyl-p-cresol were used as raw materials and a weak base type macroporous ion exchange resin was used as a catalyst to prepare pentaerythritol phosphite ester. Hydrogen chloride gas generated in a reaction was removed from a system. The catalyst after the reaction was easily separated and recovered, and may be regenerated and reused. However, using the weak base type macroporous ion exchange resin as a catalyst has disadvantages such as a high cost, a large consumption amount, and a complicated regeneration treatment. The regeneration treatment may include steps of acid washing, alkali washing, distilled water washing to neutrality, and drying, which is complicated in operation, large in energy consumption, and produces a large amount of waste water and waste salt.

In order to facilitate understanding of the present disclosure, the present disclosure will be more fully described below with reference to the relevant drawings which give the preferred embodiments of the present disclosure.

The present disclosure provides a method for preparing a phosphorus-containing ligand , which includes the following steps:
S1, mixing a phosphorus chloride compound as shown in Formula (1), polypyridine ionic liquid-loaded porous microspheres with a first organic solvent to obtain a first mixture, and mixing a compound as shown in Formula (2) with a second organic solvent to obtain a second mixture, 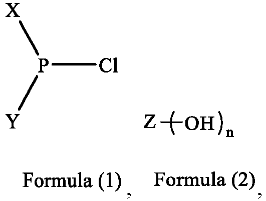 in Formula (1), X and Y are independently selected from substituted aryloxy groups or nitrogen-containing heterocyclic groups, and in Formula (2), Z is a multivalent aliphatic hydrocarbon group or a multivalent aromatic hydrocarbon group including at least one substituent group, wherein the at least one substituent group is selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, and n is an integer in a range of 1 to 8, and
S2, mixing the first mixture with the second mixture in a reaction device to make the first mixture react with the second mixture to obtain a reaction mixture, removing generated hydrogen chloride from the reaction device, filtrating the reaction mixture to obtain a filter liquor after a reaction of the first mixture and the second mixture, and treating the filter liquor to obtain the phosphorus-containing ligand.

It should be noted that the polypyridine ionic liquid-loaded porous microspheres may include polystyrene porous microspheres and polypyridine ionic liquid loaded on the polystyrene porous microspheres. When preparing the polypyridine ionic liquid-loaded porous microspheres, the polystyrene porous microspheres can play a role of "seed crystal". Specifically, pyridine monomers are physically adsorbed on the polystyrene porous microspheres, and polymerized to grow into a polypyridine ionic liquid by pores of the polystyrene porous microspheres. Thus, the formed polypyridine ionic liquid-loaded porous microspheres may have more active sites.

Therefore, in the present disclosure, when polypyridine ionic liquid-loaded porous microspheres are used as catalysts, the more active sites of the polypyridine ionic liquid-loaded porous microspheres can effectively improve reaction selectivity and yield. Meanwhile, because the polypyridine ionic liquid-loaded porous microspheres are in sphere-shaped, a post-processing thereof is simple, and properties of the polypyridine ionic liquid-loaded porous microspheres are more stable, a cycle performance of the polypyridine ionic liquid-loaded porous microspheres is good, thus the polypyridine ionic liquid-loaded porous microspheres are easy to be recycled and reused.

In an embodiment, a structural formula of the polypyridine ionic liquid is shown in Formula (3),

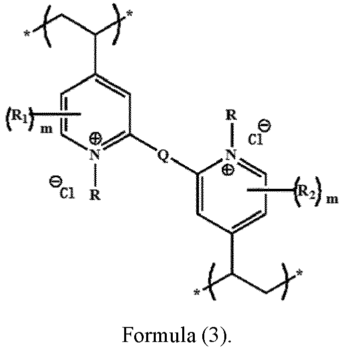

In Formula (3), R is selected from a Ci-Cio linear chain alkyl group or a Ci-Cio branched chain alkyl group.

In Formula (3), R₁ and R₂ are independently selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, and m is an integer in a range of 0 to 3. In some embodiments, R₁ and R₂ are each independently selected from hydrogen atom, fluorine atom, chlorine atom, bromine atom, methyl group, ethyl group, n-propyl group, isopropyl group, methoxy group, ethoxy group, n-propyl oxy group, isopropoxy group, cyano group, acetyl group, or propionyl group.

In Formula (3), Q is a direct bond or a divalent linking group. In some embodiments, Q is selected from 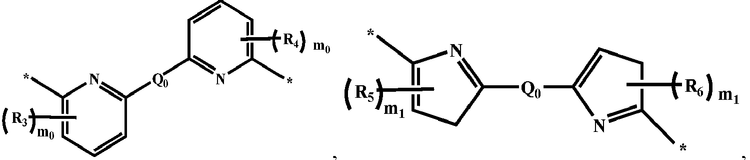 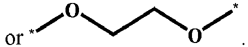 In the present disclosure, a direct bond means that two adjacent groups are directly bonded.

In some embodiments, R₃, R₄, R₅, and R₆ are independently selected from hydrogen atom, halogen atom, C₁-C₁₀ alkyl group, C₁-C₁₀ alkoxy group, C₁-C₁₀ alkanoyl group, aryl group, heteroaryl group, cyano group, or nitro group, where m₀ is an integer in a range of 0 to 3, and m₁ is an integer in a range of 0 to 2. In some embodiments, R₃, R₄, R₅, and R₆ are independently selected from hydrogen atom, fluorine atom, chlorine atom, bromine atom, methyl group, ethyl group, n-propyl group, isopropyl group, methoxy group, an ethoxy group, n-propoxy group, isopropoxy group, cyano group, acetyl group, or propionyl group.

In some embodiments, Q₀ is selected from a direct bond or a divalent linking group. In some embodiments, Q₀ is selected from 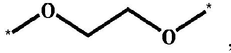 **-(CH₂)n₁-**, **-(CH₂O)n₂-**, a substituted aryl group or an unsubstituted aryl group, and n₁ and n₂ are independently selected from integers in a range of 1 to 50.

In some embodiments, the polypyridine ionic liquid-loaded porous microspheres may include polystyrene porous microspheres. Particle sizes of the polystyrene porous microspheres are in a range of 50 nm to 100 nm, and a relative deviation of the particle sizes is less than 3%.

In some embodiments, the polypyridine ionic liquid-loaded porous microspheres may have a porous structure. A BET specific surface area of the polypyridine ionic liquid-loaded porous microspheres is in a range of 50 m²/g to 500 m²/g, and an average aperture size of apertures thereof is in a range of 10 nm to 50 nm.

In some embodiments, a method for preparing the polypyridine ionic liquid-loaded porous microspheres can include the following steps.
(1) Polystyrene porous microspheres are added and ultrasonically dispersed in a first surfactant aqueous solution to obtain a first emulsion; and a third organic solvent is added and ultrasonically dispersed in a second surfactant aqueous solution to obtain a second emulsion. The second emulsion is quickly added into the first emulsion and shaken and mixed for a period of time to obtain a first mixed solution containing polystyrene porous microspheres.
(2) Pyridine monomers and an initiator are dissolved in a fourth organic solvent, and then dispersed in a third surfactant aqueous solution and subjected to ultrasonic emulsification. After the ultrasonic emulsification, the resultant is quickly added to the first mixed solution, and is continuously shaken and mixed to obtain a second mixed solution.
(3) An air in the second mixed liquid is removed by displacing the air with an inert gas, and then a polymerization reaction is carried out. After the polymerization reaction is finished, a first solid is separated from a polymerization reaction liquid, washed with a fifth organic solvent, and then dried under a vacuum condition to obtain cross-linked polystyrene pyridine porous microspheres.
(4) The cross-linked polystyrene pyridine porous microspheres are mixed with a sixth organic solvent and halogenated alkanes, and then a mixture thus obtained is stirred at a certain temperature for a reaction. After the reaction is finished, a second solid is separated from a reaction liquid and washed with a seventh organic solvent, and then dried to obtain polypyridine ionic liquid-loaded porous microspheres.

In step (1) and step (2), concentrations of the first surfactant aqueous solution, the second surfactant aqueous solution and the third surfactant aqueous solution are in arrange of 0.2 wt% to 1.5wt%. In some embodiments, concentrations of the first surfactant aqueous solution, second surfactant aqueous solution and third surfactant aqueous solution are in arrange of 0.5wt% to 1.0wt%. In some embodiments, a time of shaking and mixing is in a range of 6 hours to 18 hours. In some embodiments, the time of shaking and mixing is in a range of 10 hours to 12 hours.

The surfactant is selected from the group consisting of a cationic surfactant, an anionic surfactant, a nonionic surfactant, or a combination thereof. In some embodiments, the surfactant is selected from the group consisting of cetyltrimethyl ammonium bromide, benzyldimethyl octadecyl ammonium chloride, ammonium dodecyl sulfate, sodium dodecyl sulfate, sodium dodecyl benzene sulfonate, potassium dodecyl phosphate, polyvinyl alcohol, Tween-80, or a combination thereof.

In the first emulsion of step (1), a ratio of a mass of the polystyrene porous microspheres to a volume of the first surfactant aqueous solution is in a range of 1 g: 20 mL to 1 g: 100 mL. In the second emulsion of step (1), a volume ratio of the third organic solvent to the second surfactant aqueous solution is in a range of 1:10 -1:30.

In some embodiments, the third organic solvent is selected the group consisting of ethyl acetate, tetrahydrofuran, N,N-dimethylformamide, dimethyl sulfoxide, methanol, ethanol, propanol, tert-butyl alcohol, ethylene glycol, propylene glycol, glycerol, acetone, and any combinations thereof.

In step (2), a molar ratio of the pyridine monomers to the initiator is in a range of 20:1 to 50:1, and a mass ratio of the pyridine monomers to the polystyrene porous microspheres in step (1) is in a range of 50:1 to 100:1.

In some embodiments, a general formula of the pyridine monomers is 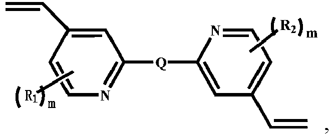 and the initiator is selected from azo initiators. In some embodiments, the initiator is at least one selected from azobisisobutyronitrile (AIBN), 2, 2'-Azobis(2,4-dimethyl)valeronitrile (ABVN), dimethyl azobisisobutyrate (AIBME), azobisisobutyronitrile amidine hydrochloride (AIBA), or azobisisobutylimidazoline hydrochloride (AIBI). The fourth organic solvent is at least one selected from aliphatic hydrocarbon or alicyclic hydrocarbon, halogenated aliphatic hydrocarbon or halogenated alicyclic hydrocarbon, substituted aromatic hydrocarbon or unsubstituted aromatic hydrocarbon, aliphatic ether, of cyclic ether. In some embodiments, the fourth organic solvent is at least one selected from benzene, toluene, xylene, dichloromethane, cyclohexane, n-hexane, or tetrahydrofuran.

In step (3), a temperature of the polymerization reaction is in a range of 40 degrees centigrade to 120 degrees centigrade. In some embodiments, the temperature of the polymerization reaction is in a range of 60 degrees centigrade to 80 degrees centigrade, and a time of the polymerization reaction is in a range of 6 hours to 36 hours. In some embodiments, the time of the polymerization reaction is in a range of 20 hours to 24 hours.

In step (3), the fifth organic solvent is at least one selected from ethyl acetate, tetrahydrofuran, N, N-dimethylformamide, dimethyl sulfoxide, methanol, ethanol, propanol, tert-butyl alcohol, ethylene glycol, propylene glycol, glycerol, or acetone.

A content of nitrogen element (ω_{N}) of the cross-linked polystyrene pyridine porous microspheres obtained in step (3) is in a range of 5% to 20%.

In step (4), a molar amount of nitrogen element (n_{N}) in the cross-linked polystyrene pyridine porous microspheres obtained in the step (3) conforms to a following equation: n_{N}=m_{C}*ω_{N}/14, wherein m_{C} refers to a mass of the cross-linked polystyrene pyridine porous microspheres. In some embodiments, a molar ratio of the cross-linked polystyrene-pyridine porous microspheres to the halogenated alkane (n_{N}: n_{halogenated alkane}) is in a range of 1: 1.0 to 1: 1.5.

In step (4), the sixth organic solvent is at least one selected from toluene, benzene, xylene, tetrahydrofuran, cyclohexane, n-hexane, or dichloromethane. The halogenated alkane is selected from Ci-Cio halogenated alkanes. In some embodiments, the halogenated alkane is at least one selected from 1-chloropropane, 2-chloropropane, 1-bromopropane, 1-bromobutane, 2-bromobutane, 1-iodopentane, or 2-iodopentane. In some embodiments, the seventh organic solvent is at least one selected from ethyl acetate, tetrahydrofuran, N, N-dimethylformamide, dimethyl sulfoxide, methanol, ethanol, propanol, tert-butyl alcohol, ethylene glycol, propylene glycol, glycerol, or acetone.

In step (4), a reaction temperature is in a range of 60 degrees centigrade to 150 degrees centigrade. In some embodiments, the reaction temperature is in a range of 80 degrees centigrade to 120 degrees centigrade. In some embodiments, a reaction time is in a range of 6 hours to 36 hours. In some embodiments, the reaction time is in a range of 18 hours to 24 hours.

In order to obtain different phosphorus-containing ligand, in some embodiments, in phosphorus chloride compounds having a structural formula as shown in Formula (1), X and Y are independently selected from substituted aryloxy groups or nitrogen-containing heterocyclic groups.

In some embodiments, a structural formula of the substituted aryloxy group is 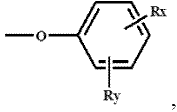 Rx and Ry are independently selected from hydrogen atom, halogen atom, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

In some embodiments, the nitrogen-containing heterocyclic group is selected from 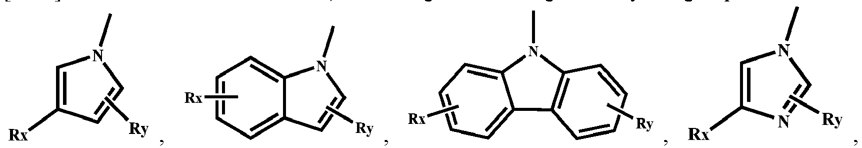 or 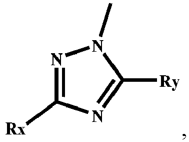 wherein Rx and Ry are independently selected from hydrogen atom, halogen atoms, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

In some embodiments, when both X and Y are each selected from 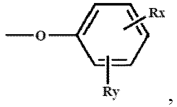 X and Y are not cyclized; when X and Y are each selected from nitrogen-containing heterocyclic groups, X and Y are not cyclized, or X and Y are cyclized via a single bond or methylene; optionally, when X is selected from 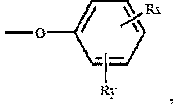 and Y is selected from a nitrogen-containing heterocyclic group, X and Y are cyclized via methylene.

In some embodiments, when both X and Y are each selected from nitrogen-containing heterocyclic groups, and X and Y are cyclized via a single bond or methylene to form a structure selected from any one of the group consisting of: 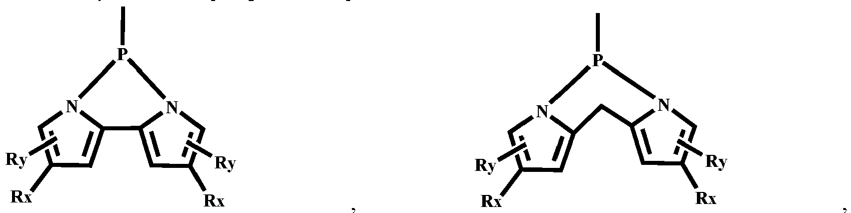 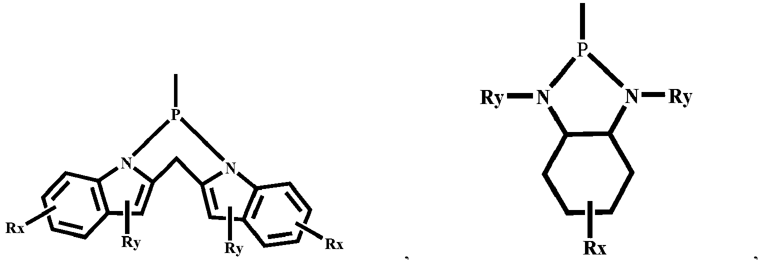 or

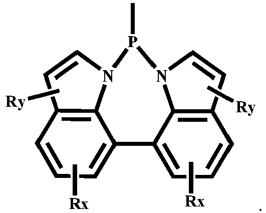

In some embodiments, in Formula (2), Z is selected from 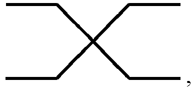 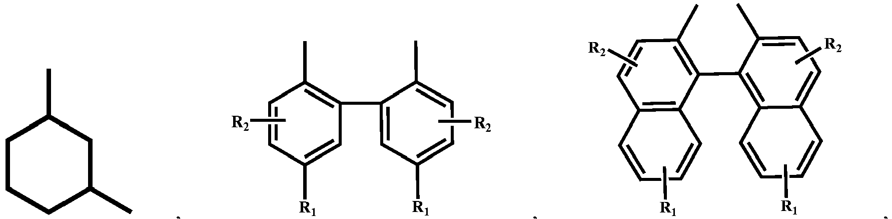 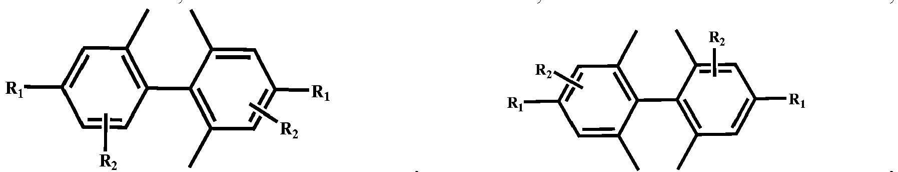 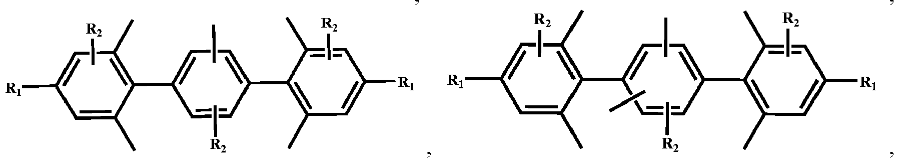 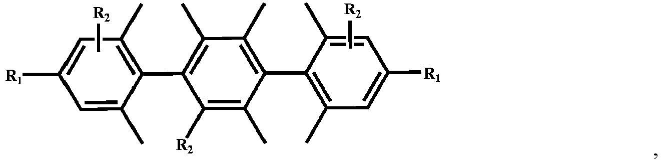 or 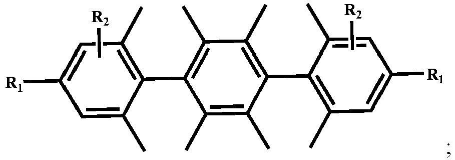 wherein R₁ and R₂ are independently selected from hydrogen atom, halogen atoms, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

In some embodiments, in Formula (2), n is an integer in a range of 2 to 8. In some embodiments, in Formula (2), n is an integer in a range of 2 to 4.

In some embodiments, both the first organic solvent in the first mixture and the second organic solvent in the second mixture are selected from at least one of C₄-C₈ alkane, ester, ether, C₃-C₆ ketone, or nitrile. In some embodiments, both the first organic solvent in the first mixture and the second organic solvent in the second mixture are selected from at least one of benzene, toluene, xylene, pentane, n-hexane, n-heptane, cyclohexane, methylcyclohexane, ether, diisopropyl ether, methyl tert-butyl ether, tetrahydrofuran, dichloromethane, 1,4-dioxane, 1,3-dioxolane, ethyl acetate, isobutyl acetate, tert-butyl acetate, acetone, 2-butanone, 3,3-dimethyl-2-butanone, benzonitrile, propionitrile, or acetonitrile. And in some embodiments, both the first organic solvent in the first mixture and the second organic solvent in the second mixture are elected from at least one of tetrahydrofuran, toluene, or ethyl acetate.

In some embodiments, a molar concentration of the phosphorus chloride compound in the first mixture is in a range of 0.05 mol/L to 5.0 mol/L. In some embodiments, a molar concentration of the phosphorus chloride compound in the first mixture is in a range of 0.05 mol/L to 2.0 mol/L.

In some embodiments, a molar concentration of the compound as shown in Formula (2) of the second mixture is in a range of 0.05 mol/L to 5.0 mol/L. In some embodiments, a molar concentration of the compound as shown in Formula (2) in the second mixture is in a range of 0.2 mol/L to 1.5 mol/L.

In step S2, in the step of mixing the first mixture with the second mixture in a reaction device to make the first mixture react with the second mixture to obtain a reaction mixture, a reaction temperature is in a range of 0 to 50 degrees centigrade. In some embodiments, the reaction temperature is in a range of 20 degrees centigrade to 30 degrees centigrade. In step S2, a reaction time is in a range of 1 hour to 5 hours. In some embodiments, the reaction time is in a range of 3 hours to 3.5 hours. Meanwhile, a molar ratio of the phosphorus chloride compound to the compound as shown in Formula (2) is controlled to be in a range of 1.0:(1/x) to 1.3:(1/x), wherein x is equal to n in the compound of Formula (2), and a molar ratio of nitrogen element in the polypyridine ionic liquid-loaded porous microspheres to a hydroxyl group in the compound as shown in Formula (2) is controlled to be in a range of 0.01:1 to 0.1:1. In some embodiments, the molar ratio of nitrogen element in the polypyridine ionic liquid-loaded porous microspheres to the hydroxyl group in the compound as shown in Formula (2) is controlled to be in a range of 0.02:1 to 0.05:1.

In some embodiments, in the step of mixing the first mixture with the second mixture in the reaction device to make the first mixture react with the second mixture to obtain the reaction mixture, the second mixture is added to the first mixture in batches by means of dropwise addition and the like. In some embodiments, the second mixture is continuously and uniformly added dropwise to the first mixture, and an adding duration is controlled in a range of 2 hours to 10 hours. And in some embodiments, the adding duration is in a range of 3 hours to 5 hours.

In step S2 of the present disclosure, in a reaction process, hydrogen chloride generated by the reaction is further removed from a reaction device, so as to solve problems of a high viscosity of a system and a difficult post-processing, while improving a selectivity of the reaction and a yield of the reaction.

In some embodiments, the generated hydrogen chloride may be removed from the reaction device by physical methods such as protective gas purging, decompression, ultrasound, etc., and discharged into a hydrogen chloride absorption system to generate hydrochloric acid.

Continuously introducing the protective gas into the reaction device and purging can improve a mixing effect of the reaction. In some embodiments, in step S2, in a step of mixing the first mixture with the second mixture in the reaction device to make the first mixture react with the second mixture, a protective gas is introduced into the reaction device for purging to remove the hydrogen chloride produced by a reaction of the first mixture and the second mixture out from the reaction device.

It can be understood that, any gas that does not affect the reaction can be used as a protective gas. In some embodiments, the protective gas is selected from at least one of nitrogen, argon, neon, helium, carbon monoxide, or carbon dioxide.

In an actual operation, a dry protective gas may be continuously introduced into the reaction device to replace the air and water vapor inside the reaction device, and then the first mixture may be added in the reaction device. Then the second mixture may be dropwise added in the reaction device, and then the second mixture may be added to the first mixture in batches by means of dropwise addition and the like. During the addition, the dry protective gas may be continuously introduced in the reaction device for purging.

After a reaction is completed, a reaction solution is filtered, a filter liquor is firstly concentrated to remove the organic solvent, and a concentrated solution is subjected to a posttreatment, separation and purification to obtain phosphorus-containing ligands. Typically, the phosphorus-containing ligands can be separated and purified by post-processing means such as column chromatography, simulated moving bed, crystallization, extraction, rectification, and the like.

Meanwhile, in a step of filtering the reaction solution, second polypyridine ionic liquid-loaded porous microspheres may be further recovered. In some embodiments, the recovered second polypyridine ionic liquid-loaded porous microspheres may be recycled and re-used in the first mixture in step S1 after washing and drying.

Hereinafter, a method for preparing the phosphorus-containing ligand will be further illustrated in conjunction with the following specific embodiments.

In the following methods for preparing polypyridine ionic liquid-loaded porous microspheres, structural formulas of pyridine monomers are as shown in Formulas N₀-1 to N₀-10.

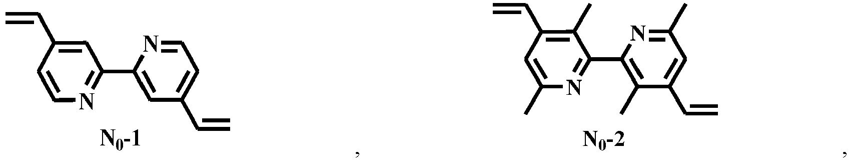

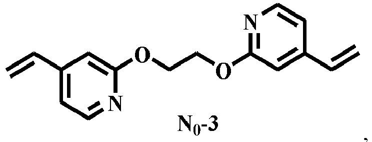

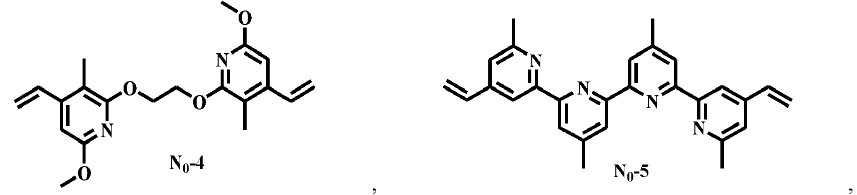

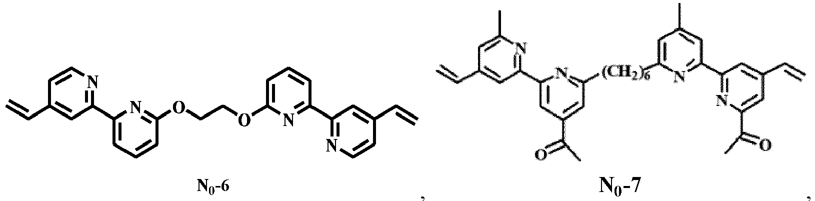

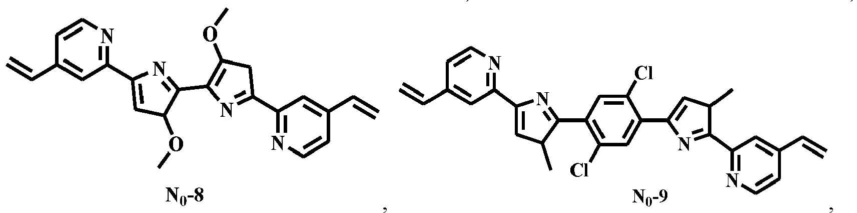

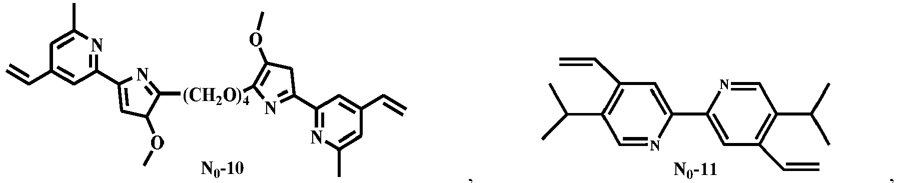

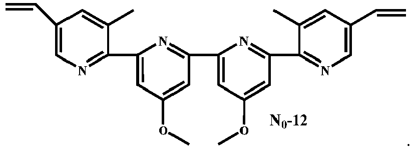

### Preparation of polypyridine ionic liquid-loaded porous microspheres D1

(1) 1g of polystyrene porous microspheres (a particle size of which was 55 nm, a relative deviation of the particle sizes was 1.6%) were ultrasonically dispersed in 20 mL of a sodium dodecyl sulfate solution (0.5 wt%) to obtain a first emulsion. 2 mL of butyl acetate was ultrasonically dispersed in 20 mL of sodium dodecyl sulfate solution (0.5 wt%) to obtain a second emulsion. The second emulsion was quickly added into the first emulsion, mixed and shaken at room temperature for 12 hours to obtain a first mixed solution containing polystyrene porous microspheres.
(2) 50 g of bipyridine monomers having a structural formula as shown in Formula No-1 and 1.97g of AIBN initiator were dissolved in 40 mL of toluene, and a mixture of the bipyridine monomer and the AIBN initiator were dispersed in a sodium dodecyl sulfate solution (0.5wt%) and ultrasonically emulsified. After the ultrasonic emulsification, the resultant was quickly added to the first mixed solution and mixed with the first mixed solution by continuously shaking at a room temperature for 12 hours to obtain a second mixed solution.
(3) Nitrogen was introduced into the reaction device to remove air in the second mixed solution, and the second mixed solution was then vibrated and polymerized at a temperature of 65 degrees centigrade for 24 hours. After the vibration polymerization, a polymerization reaction solution was centrifuged, washed with ethanol, and then vacuum-dried at a room temperature to obtain 49.98 g of cross-linked polystyrene pyridine porous microspheres C1. A content of nitrogen element in the cross-linked polystyrene pyridine porous microspheres C1 was tested by elemental analysis.
(4) 45 g of the cross-linked polystyrene pyridine porous microspheres were placed in a reaction flask, and then a certain amount of toluene and 34.94 g of 1-chloropropane were added into the reaction flask. The cross-linked polystyrene pyridine porous microspheres, the toluene, and the 1-chloropropane in the reaction flask were mixed evenly, and then were stirred at 100 degrees centigrade for 24 hours for a reaction. Thereafter, a reaction solution was centrifuged, washed with ethanol, and dried under vacuum at a room temperature to obtain 78.9 g of polypyridine ionic liquid-loaded porous microspheres D1 with a yield of 98.7%. A nitrogen content of the polypyridine ionic liquid-loaded porous microspheres D1 was tested by elemental analysis.

Methods for preparing polypyridine ionic liquid-loaded porous microspheres D2 to D12 were substantially the same as the method for preparing the polypyridine ionic liquid-loaded porous microspheres D1, except that some reaction parameters in the methods for preparing the polypyridine ionic liquid-loaded porous microspheres D2 to D12 are different from those in the method for preparing the polypyridine ionic liquid-loaded porous microspheres D1. Specific reaction parameters in the methods for preparing the polypyridine ionic liquid-loaded porous microspheres D2 to D12 are shown in Table 1, and reaction results thereof are shown in Table 2.

**Table 1**

| No. | Surfactant | Pyridine monomer | | Polymerization temperature /degrees centigrade | Initiator | | Halogenated alkane | |
|---|---|---|---|---|---|---|---|---|
| | | Structure | Mass/g | | Type | Mass/g | Type | Mass/g |
| D2 | Sodium dodecyl sulfate | N₀-2 | 50 | 65 | ABVN | 2.35 | 1-chlorop ropane | 48.02 |
| D3 | Polyvinyl alcohol | N₀-3 | 50 | 70 | AIBME | 2.15 | 1-chlorob utane | 30.99 |
| D4 | Polyvinyl alcohol | N₀-4 | 55 | 70 | AIBA | 1.67 | 2-chlorop ropane | 37.28 |
| D5 | Tween-80 | N₀-5 | 60 | 80 | AIBI | 1.54 | 2-chlorop entane | 85.19 |
| D6 | Tween-80 | N₀-6 | 60 | 80 | AIBN | 0.78 | 2-chlorob utane | 119.58 |
| D7 | Sodium dodecyl benzene sulfonate | N₀-7 | 100 | 80 | ABVN | 0.89 | 1-chlorop entane | 62.77 |
| D8 | Sodium dodecyl benzene sulfonate | N₀-8 | 80 | 85 | AIBN | 0.68 | 1-chlorop ropane | 101.53 |
| D9 | Sodium dodecyl sulfate | N₀-9 | 80 | 65 | ABVN | 0.97 | 1-chlorob utane | 131.50 |
| D10 | Polyvinyl alcohol | N₀-10 | 100 | 65 | AIBME | 0.84 | 2-chloroh exane | 64.16 |
| D11 | Tween-80 | N₀-11 | 50 | 65 | AIBA | 2.32 | 2-chlorobutane | 58.83 |
| D12 | Sodium dodecyl benzene sulfonate | N₀-12 | 60 | 80 | AIBN | 0.73 | 1-chlorop ropane | 37.83 |

**Table 2**

| Cross-linked polystyrene pyridine porous microspheres | | Polypyridine ionic liquid-loaded porous microspheres | | | | |
|---|---|---|---|---|---|---|
| No. | Content of nitrogen element /% | No. | Content of nitrogen element /% | Specific surface area / m²/g | Average particle size / µm | Average aperture size / nm |
| C1 | 13.19 | D1 | 7.43 | 394 | 580 | 28.2 |
| C2 | 10.39 | D2 | 5.03 | 404 | 562 | 32.0 |
| C3 | 10.24 | D3 | 6.06 | 412 | 554 | 30.3 |
| C4 | 7.72 | D4 | 4.42 | 388 | 548 | 29.8 |
| C5 | 13.20 | D5 | 5.18 | 379 | 532 | 28.7 |
| C6 | 13.08 | D6 | 4.12 | 410 | 541 | 29.5 |
| C7 | 9.95 | D7 | 5.86 | 422 | 553 | 31.1 |
| C8 | 13.92 | D8 | 7.01 | 418 | 567 | 30.8 |
| C9 | 10.85 | D9 | 3.77 | 412 | 570 | 31.5 |
| C10 | 10.17 | D10 | 5.94 | 420 | 558 | 32.2 |
| C11 | 18.84 | D11 | 8.17 | 385 | 558 | 29.3 |
| C12 | 12.27 | D12 | 6.98 | 392 | 564 | 30.6 |

In the methods for preparing the phosphorus-containing ligands of the following Embodiment 1 to Embodiment 12, structural formula of the phosphorus chloride compounds represented by Formula (1) are shown in Formulas E1 to E12, structural formulas of the compound represented by Formula (2) were shown as Formulas F1 to F12, and structural formulas of the phosphorus-containing ligands are as shown in Formulas L1 to L 12.

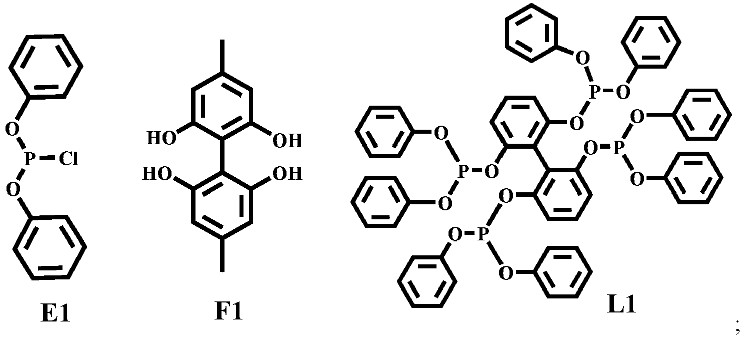

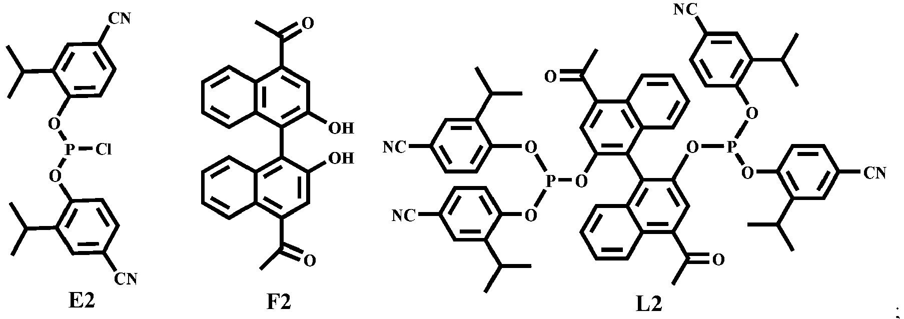

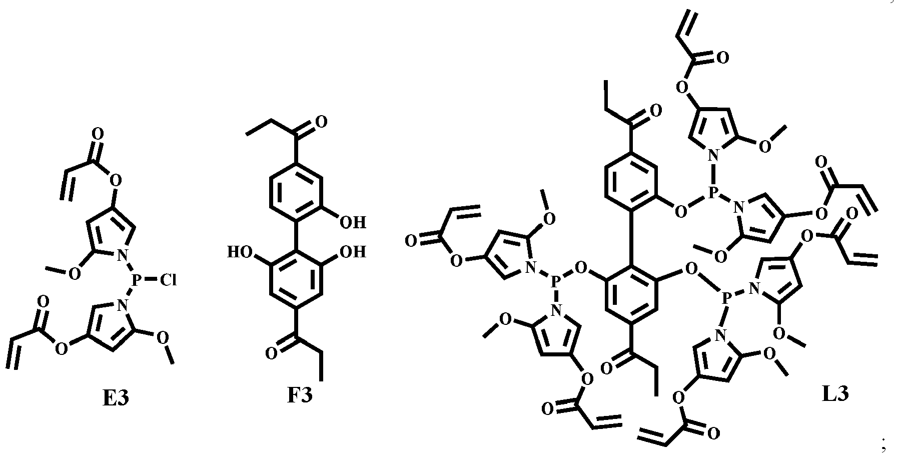

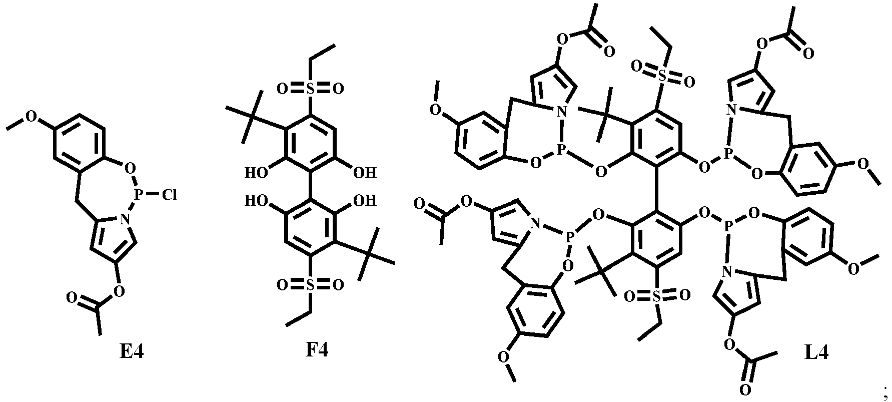

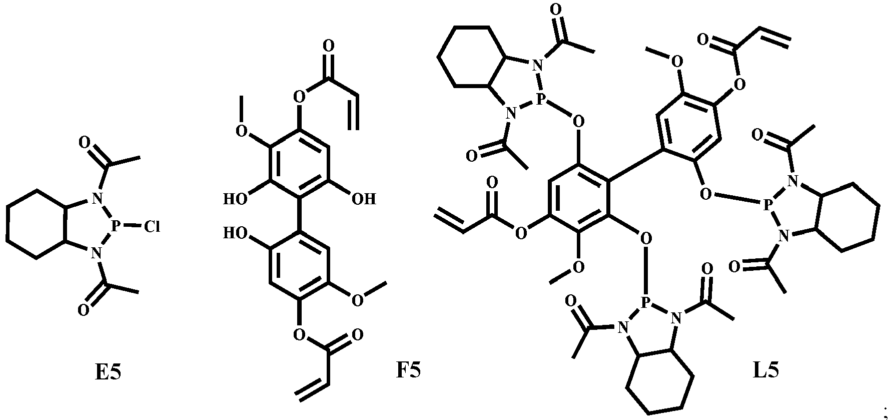

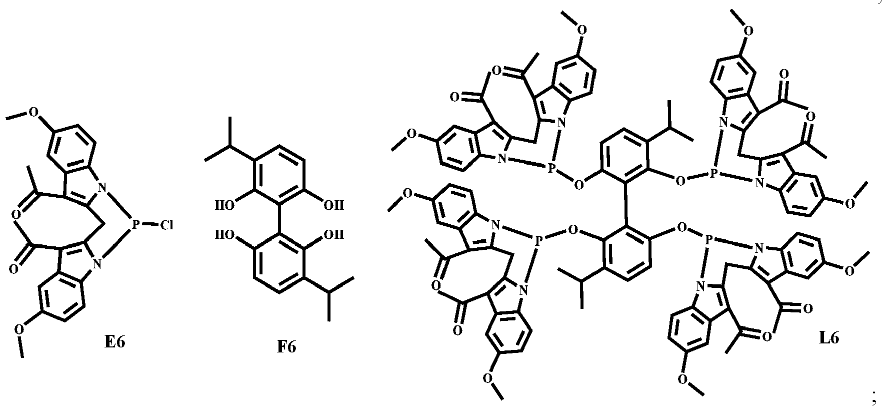

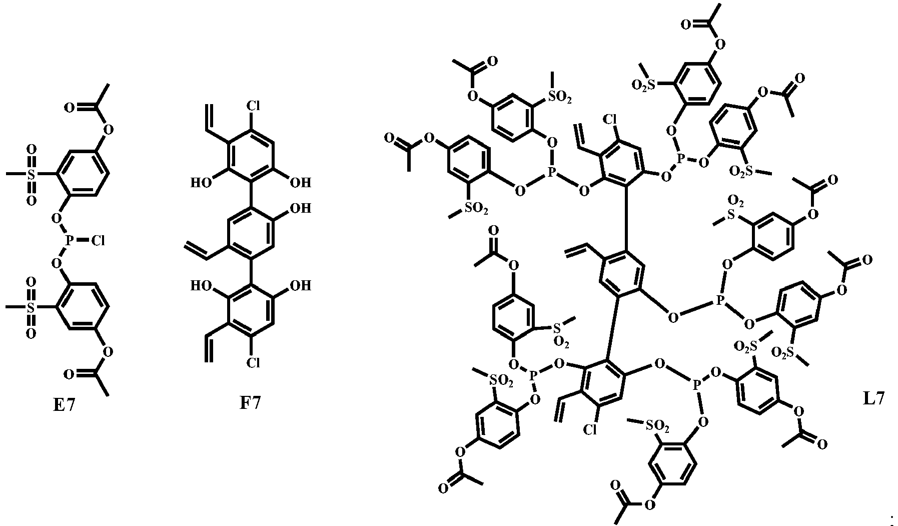

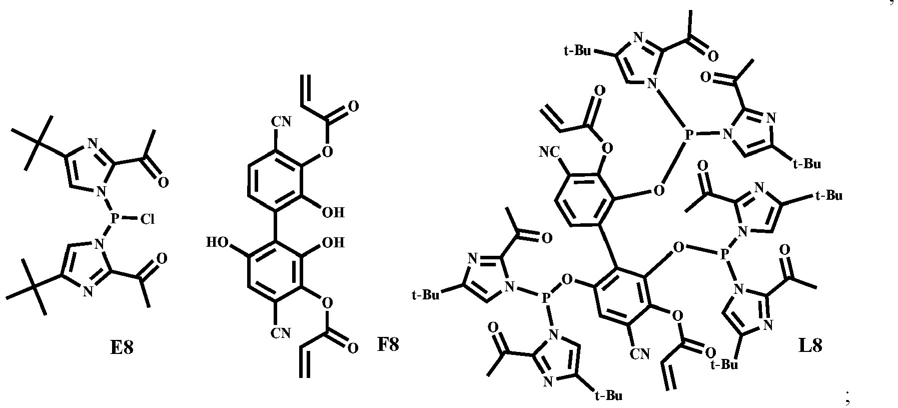

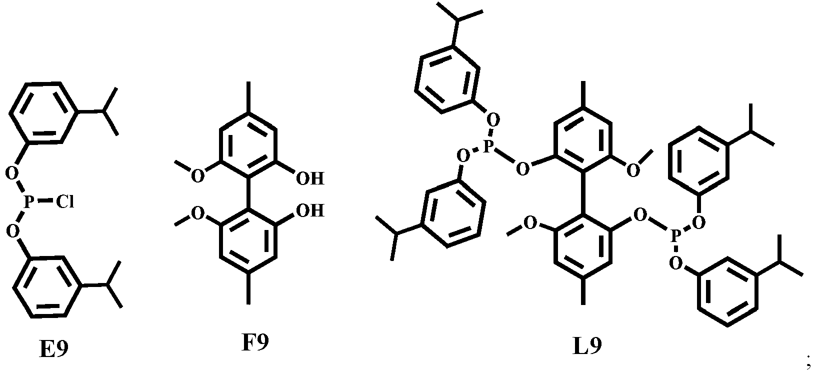

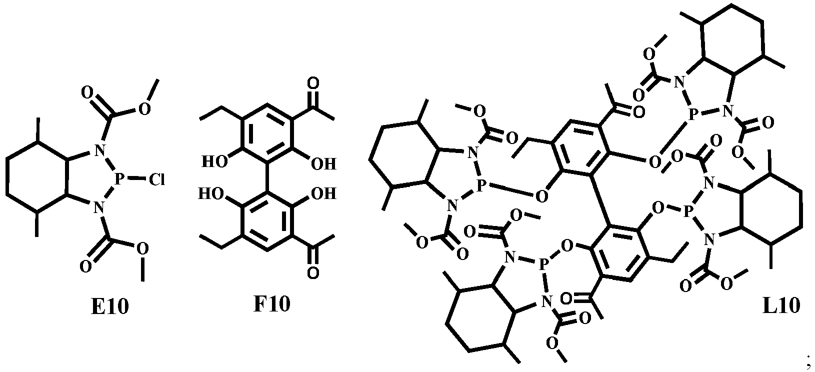

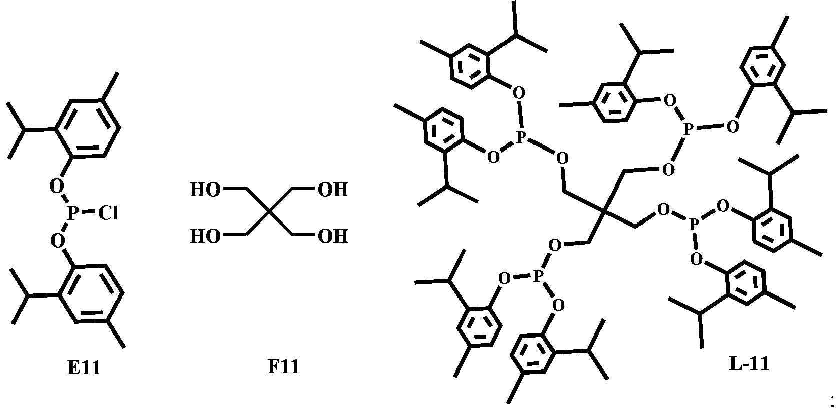

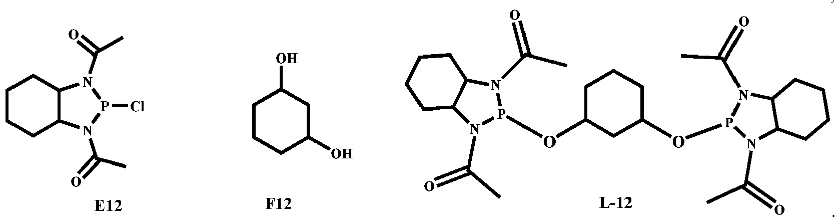

### Embodiment 1

Phosphorus chloride compound E1 (86.17 g, 0.341mol), polypyridine ionic liquid-loaded porous microspheres D1 (3.68 g, containing 0.0195 mol of nitrogen element), and toluene were mixed into 200 mL of a first mixture.

4, 5-dimethyl-2, 2', 6, 6'-tetrahydroxybiphenyl F1 (20 g, 0.081mol) was mixed with toluene to make 100 mL of a second mixture.

Dry nitrogen gas was continuously fed into a reaction device for 30 min to replace air and water vapor inside the reaction device. Then the first mixture was transferred to the reaction device, and the second mixture was transferred to a high-level dripping device. A stirrer in the reaction device was started and hydrogen chloride absorption system was operated.

At a temperature of 25 degrees centigrade, the second mixture was continuously and uniformly added into the reaction device from the high-level dripping device. An adding time was 3 hours, and dry nitrogen was continuously introduced into the reaction device during the dripping process. After the dripping process was completed, reactants in the reaction device were continuously stirred for 4 hours. Subsequently, a reaction solution was filtered to remove polypyridine ionic liquid-loaded porous microspheres D1 from the reaction solution to obtain a filter liquor. The filter liquor was concentrated to remove toluene from the filter liquor and obtain a concentrated solution. The concentrated solution was separated and purified by column chromatography to obtain 70.65 g of phosphorus-containing ligand L1 with a yield of 78.3%.

Methods for preparing phosphorus-containing ligands L2 to L12 were the same as the method for preparing the phosphorus-containing ligand L1, except that reaction parameters in the methods for preparing the phosphorus-containing ligands L2 to L12 were different from those in the method for preparing the phosphorus-containing ligand L1. Specific reaction parameters in the methods for preparing the phosphorus-containing ligands L2 to L12 were shown in Table 3, and reaction results thereof were shown in Table 4.

**Table 3**

| | Polypyridine ionic liquid-loaded porous microspheres | | Phosphorus chloride compounds represented in Formula (1) | | Compound represented in Formula (2) | |
|---|---|---|---|---|---|---|
| | Type | Mass/g | Type | Mass /g | Type | Mass /g |
| Embodiment 1 | D1 | 3.68 | E1 | 86.17 | F1 | 20 |
| Embodiment 2 | D2 | 0.38 | E2 | 45.95 | F2 | 20 |
| Embodiment 3 | D3 | 1.98 | E3 | 91.33 | F3 | 20 |
| Embodiment 4 | D4 | 2.78 | E4 | 55.69 | F4 | 20 |
| Embodiment 5 | D5 | 0.97 | E5 | 47.00 | F5 | 20 |
| Embodiment 6 | D6 | 3.73 | E6 | 138.40 | F6 | 20 |
| Embodiment 7 | D7 | 5.22 | E7 | 137.74 | F7 | 20 |
| Embodiment 8 | D8 | 1.37 | E8 | 69.80 | F8 | 20 |
| Embodiment 9 | D9 | 1.63 | E9 | 56.48 | F9 | 20 |
| Embodiment 10 | D10 | 3.68 | E10 | 86.45 | F10 | 20 |
| Embodiment 11 | D11 | 6.04 | E11 | 364.14 | F11 | 20 |
| Embodiment 12 | D12 | 0.69 | E12 | 262.06 | F12 | 20 |

**Table 4**

| | Phosphorus-containing ligand | | | | Recovery rate of polypyridine ionic liquid-loaded porous microspheres |
|---|---|---|---|---|---|
| | Type | Mass /g | Selectivity % | Yield | |
| Embodiment 1 | L1 | 70.65 | 83.9 | 78.3% | 99.2% |
| Embodiment 2 | L2 | 51.65 | 92.4 | 89.3% | 99.5% |
| Embodiment 3 | L3 | 67.40 | 80.5 | 75.6% | 98.7% |
| Embodiment 4 | L4 | 42.74 | 71.3 | 65.8% | 99.1% |
| Embodiment 5 | L5 | 38.37 | 76.2 | 71.4% | 99.7% |
| Embodiment 6 | L6 | 80.38 | 65.8 | 61.5% | 98.9% |
| Embodiment 7 | L7 | 70.25 | 60.6 | 55.4% | 99.0% |
| Embodiment 8 | L8 | 48.22 | 70.5 | 64.2% | 99.6% |
| Embodiment 9 | L9 | 48.99 | 81.7 | 76.8% | 99.4% |
| Embodiment 10 | L10 | 60.49 | 75.3 | 72.1% | 98.8% |
| Embodiment 11 | L11 | 180.59 | 88.9 | 85.7% | 99.4% |
| Embodiment 12 | L12 | 87.63 | 93.5 | 89.5% | 99.1% |

### Experiments on recycle of polypyridine ionic liquid-loaded porous microspheres

Polypyridine ionic liquid-loaded porous microspheres D1 recycled in Embodiment 1 were re-used in experiments for preparing phosphorus-containing ligand L1. Data of the experiments were shown in Table 5 below, and specific steps for preparing the phosphorus-containing ligand L1 were the same as those in Embodiment 1.

**Table 5**

| Times of recycle | Polypyridine ionic liquid-loaded porous microspheres D1 | | Reaction time /h | Phosphorus-containing ligand L1 | |
|---|---|---|---|---|---|
| | content of nitrogen element /% | Recovery rate /% | | Selectivity /% | Yield /% |
| 1 | 7.43 | 99.3 | 4 | 83.6 | 78.5 |
| 3 | 7.41 | 99.5 | 4 | 83.9 | 78.7 |
| 5 | 7.40 | 99.4 | 4 | 83.4 | 78.1 |
| 10 | 7.38 | 99.6 | 4 | 83.2 | 78.4 |
| 20 | 7.36 | 98.9 | 4 | 81.5 | 76.9 |

It can be seen from Table 5 that the polypyridine ionic liquid-loaded porous microspheres of the present disclosure can be recycled for many times, and a recovery rate was still greater than 95% and a reactivity was not significantly reduced after 20 recycles.

### Comparative Embodiment 1

Comparative embodiment 1 differed from Embodiment 1 only in that the polypyridine ionic liquid-loaded porous microspheres in embodiment 1 was replaced with a weak base type macroporous ion exchange resin (3.68 g, model: D301, produced by Chemical Plant of Nankai University). In comparative embodiment 1, after a reaction was completed, 48.45 g of phosphorus-containing ligand L1 was can be obtained by separation and purification, with a selectivity of 59.2% and a yield of 53.7%.

### Comparative Embodiment 2

Comparative embodiment 2 differed from Embodiment 1 only in that the polypyridine ionic liquid-loaded porous microspheres in Embodiment 1 was replaced with 81 mL of anhydrous triethylamine, and the reaction in comparative embodiment 2 was carried out without continuous introduction of dry nitrogen or operation of hydrogen chloride absorption system. In comparative embodiment 2, after the reaction was completed, 38.35 g of phosphate-containing ligand L1 was obtained by separation and purification, with a selectivity of 47.3% and a yield of 42.5%.

In preparation methods of the present disclosure, polypyridine ionic liquid-loaded porous microspheres were used as catalysts, and porous structures of the polypyridine ionic liquid-loaded porous microspheres can increase catalytic active sites of a reaction, thereby improving a selectivity and a yield of the reaction. Meanwhile, a catalytic effect can reduce an activation energy required for the reaction. Specifically, due to the catalytic effect, a reaction temperature can be reduced, and a chemical reaction rate can be speed up, which is more suitable for preparing phosphorus-containing ligands containing sensitive groups (such as double bonds, etc.). Moreover, the catalysts in the present disclosure have stable properties, simple post-treatments, good recycling performances, and thus they are easy to be recovered and reused.

In the present disclosure, in a reaction process, hydrogen chloride generated by the reaction is removed from a reaction device, so as to solve problems of a high viscosity of a system and a difficult post-processing, thus improving a selectivity and a yield of the reaction.

The technical features of the above-described embodiments may be combined in any combination. For the sake of brevity of description, not all possible combinations of the technical features in the above embodiments are described. However, as long as there is no contradiction between the combinations of these technical features, all should be considered as within the scope of this disclosure as defined in the appended claims.

## Claims

1. A method for preparing a phosphorus-containing ligand, comprising:
mixing a phosphorus chloride compound as shown in Formula (1), first polypyridine ionic liquid-loaded porous microspheres with a first organic solvent to obtain a first mixture, and mixing a compound as shown in Formula (2) with a second organic solvent to obtain a second mixture; and
mixing the first mixture with the second mixture in a reaction device to make the first mixture react with the second mixture to obtain a reaction mixture, removing generated hydrogen chloride from the reaction device, filtrating the reaction mixture to obtain a filter liquor after a reaction of the first mixture and the second mixture, and treating the filter liquor to obtain the phosphorus-containing ligand, 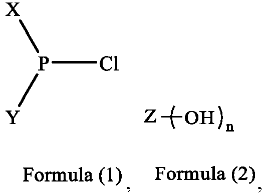
wherein in Formula (1), X and Y are independently selected from substituted aryloxy groups or nitrogen-containing heterocyclic groups,
in Formula (2), Z is a multivalent aliphatic hydrocarbon group or a multivalent aromatic hydrocarbon group comprising at least one substituent group,
wherein the at least one substituent group is selected from hydrogen atom, halogen atoms, C₁-C₁₀ alkyl group, C₁-C₁₀ alkoxy group, C₁-C₁₀ alkanoyl group, aryl group, heteroaryl group, cyano group, or nitro group, and n is an integer in a range of 1 to 8.

2. The method of claim 1, wherein the first polypyridine ionic liquid-loaded porous microspheres comprises a polypyridine ionic liquid, and a structural formula of the polypyridine ionic liquid is shown in Formula (3), 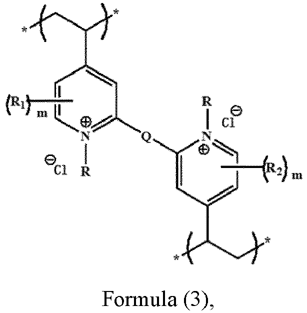 wherein in Formula (3), R is selected from a C₁-C₁₀ linear chain alkyl group or a C₁-C₁₀ branched chain alkyl group, wherein R₁ and R₂ are independently selected from hydrogen atom, halogen atoms, C₁-C₁₀ alkyl group, C₁-C₁₀ alkoxy group, C₁-C₁₀ alkanoyl group, aryl group, heteroaryl group, cyano group, or nitro group, m is an integer in a range of 0 to 3, and Q is a direct bond or a divalent linking group.

3. The method of claim 2, wherein Q is selected from 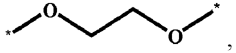 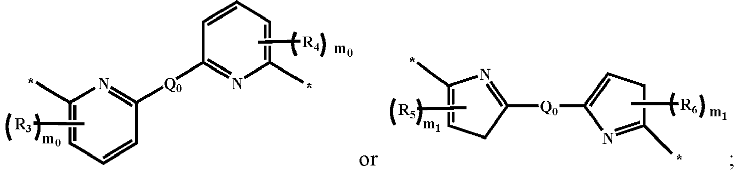 wherein R₃, R₄, R₅, and R₆ are independently selected from hydrogen atom, halogen atoms, C₁-C₁₀ alkyl group, C₁-C₁₀ alkoxy group, C₁-C₁₀ alkanoyl group, aryl group, heteroaryl group, cyano group, or nitro group, wherein Q₀ is selected from a direct bond or a divalent linking group, m₀ is an integer in a range of 0 to 3, and m₁ is an integer in a range of 0 to 2.

4. The method of claim 3, wherein Q₀ is selected from 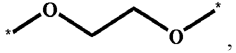 **-(CH₂)n₁-**, -**(CH₂O)n₂**-, substituted aryl group, or unsubstituted aryl group, and n₁ and n₂ are independently selected from integers in a range of 1 to 50.

5. The method of any one of claims 1 to 4, wherein the first polypyridine ionic liquid-loaded porous microspheres comprises polystyrene porous microspheres, particle sizes of the polystyrene microspheres are in a range of 50 nm to 100 nm, and a relative deviation of the particle sizes is less than 3%, or,
a BET specific surface area of the first polypyridine ionic liquid-loaded porous microspheres is in a range of 50m²/g to 500m²/g, and an average aperture size of apertures in the first polypyridine ionic liquid-loaded porous microspheres is in a range of 10 nm to 50 nm.

6. The method of any one of claims 1 to 4, wherein in Formula (1), a structural formula of the substituted aryloxy groups is 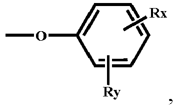 wherein Rx and Ry are independently selected from hydrogen atom, halogen atoms, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group.

7. The method of claim 6, wherein when both X and Y are selected from 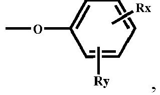 X and Y are not cyclized; or,
when both X and Y are selected from nitrogen-containing heterocyclic groups, X and Y are not cyclized, or X and Y are cyclized via a single bond or methylene; or,
when X is selected from 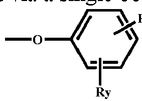 and Y is selected from nitrogen-containing heterocyclic groups, X and Y are cyclized via methylene.

8. The method of claim 7, wherein the nitrogen-containing heterocyclic groups are selected from 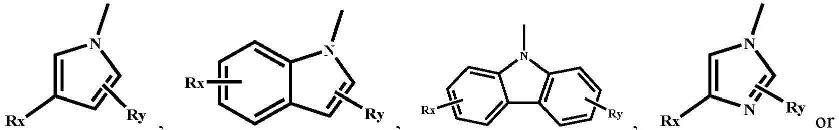 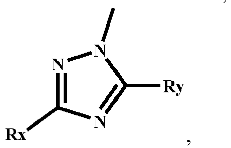 wherein Rx and Ry are independently selected from hydrogen atom, halogen atoms, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group or methacryloyl group.

9. The method of claim 8, wherein both X and Y are selected from nitrogen-containing heterocyclic groups, and X and Y are cyclized via the single bond or the methylene to form a structure selected from any one of the group consisting of

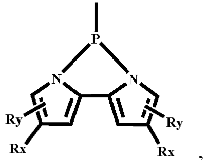

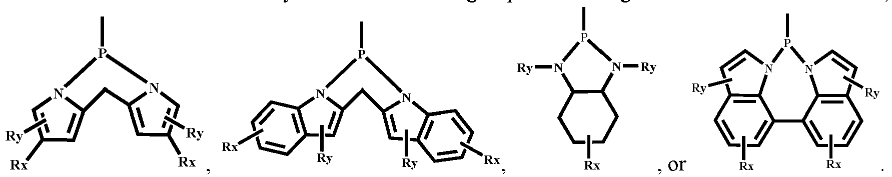

10. The method of any one of claims 1 to 4, wherein in Formula (2), Z is selected from 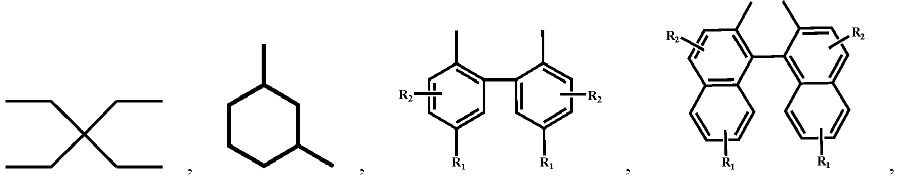 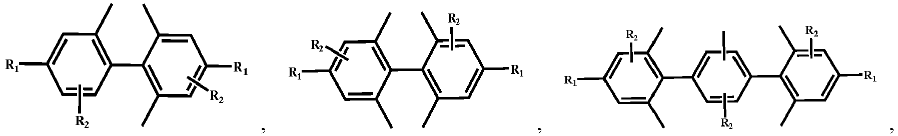 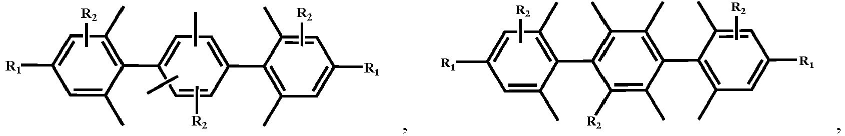 or 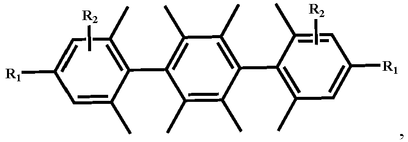
wherein R₁ and R₂ are independently selected from hydrogen atom, halogen atoms, nitrile group, C₁-C₁₀ alkyl group, C₁-C₁₀ alkoxy group, C₁-C₁₀ alkanoyl group, C₁-C₁₀ ester group, C₁-C₁₀ sulfonate group, vinyl group, propenyl group, acryloyl group, acrylate group, or methacryloyl group, or,
n is an integer in a range of 2 to 4.

11. The method of any one of claims 1 to 4, wherein in the step of mixing the first mixture with the second mixture in the reaction device to obtain the reaction mixture, a molar ratio of the phosphorus chloride compound to the compound as shown in Formula (2) is in a range of 1.0:(1/x) to 1.3:(1/x), x is equal to n in Formula (2), and a molar ratio of nitrogen atoms in the first polypyridine ionic liquid-loaded porous microspheres to hydroxyl groups in the compound as shown in Formula (2) is in a range of 0.01:1 to 0.1:1, or,
a molar concentration of the phosphorus chloride compound in the first mixture is in a range of 0.05 mol/L to 5.0 mol/L, and a molar concentration of the compound as shown in Formula (2) in the second mixture is in a range of 0.05 mol/L to 5.0 mol/L.

12. The method of any one of claims 1 to 4, wherein in the step of mixing the first mixture with the second mixture in the reaction device to make the first mixture react with the second mixture to obtain the reaction mixture, a reaction temperature is in a range of 0 to 50 degrees centigrade, and a reaction time is in a range of 1 hour to 5 hours.

13. The method of any one of claims 1 to 4, wherein in the step of mixing the first mixture with the second mixture in the reaction device to make the first mixture react with the second mixture to obtain the reaction mixture, adding the second mixture into the first mixture in batches, or,
in the step of adding the second mixture into the first mixture in batches, an adding duration is in a range of 2 hours to 10 hours.

14. The method of any one of claims 1 to 4, wherein the step of filtrating the reaction mixture to obtain the filter liquor after the reaction further comprises recovering second polypyridine ionic liquid-loaded porous microspheres, and,
after the recovering the second polypyridine ionic liquid-loaded porous microspheres, further comprising a step of washing, drying and re-using the recovered second polypyridine ionic liquid-loaded porous microspheres for preparing the first mixture.

15. The method of any one of claims 1 to 4, wherein the step of mixing the first mixture with the second mixture in the reaction device to make the first mixture react with the second mixture to obtain the reaction mixture further comprises blowing a protective gas in to the reaction device to remove the generated hydrogen chloride out from the reaction device.

## Patentansprüche

1. Ein Verfahren zur Herstellung eines phosphorhaltigen Liganden, umfassend:
Mischen einer Phosphorchloridverbindung wie in Formel (1) gezeigt, erster mit Polypyridin-Ionenflüssigkeit beladener poröser Mikrokügelchen mit einem ersten organischen Lösungsmittel, um eine erste Mischung zu erhalten, und Mischen einer Verbindung wie in Formel (2) gezeigt mit einem zweiten organischen Lösungsmittel, um eine zweite Mischung zu erhalten, und
Mischen der ersten Mischung mit der zweiten Mischung in einer Reaktionsvorrichtung, um die erste Mischung mit der zweiten Mischung reagieren zu lassen und so eine Reaktionsmischung zu erhalten, Entfernen von erzeugtem Chlorwasserstoff aus der Reaktionsvorrichtung, Filtrieren der Reaktionsmischung, um nach einer Reaktion der ersten Mischung und der zweiten Mischung eine Filterflüssigkeit zu erhalten, und Behandeln der Filterflüssigkeit, um den phosphorhaltigen Liganden zu erhalten, 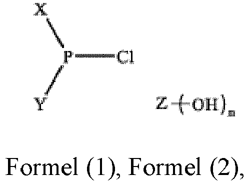
wobei in Formel (1) X und Y unabhängig voneinander ausgewählt sind aus substituierten Aryloxygruppen oder stickstoffhaltigen heterocyclischen Gruppen,
in Formel (2) Z eine mehrwertige aliphatische Kohlenwasserstoffgruppe oder eine mehrwertige aromatische Kohlenwasserstoffgruppe ist, die mindestens eine Substituentengruppe umfasst,
wobei die mindestens eine Substituentengruppe aus einem Wasserstoffatomen, Halogenatomen, einer C₁-C₁₀-Alkylgruppe, einer C₁-C₁₀-Alkoxygruppe, einer C₁-C₁₀-Alkanoylgruppe, einer Arylgruppe, einer Heteroarylgruppe, einer Cyanogruppe oder einer Nitrogruppe ausgewählt ist und n eine ganze Zahl im Bereich von 1 bis 8 ist.

2. Verfahren nach Anspruch 1, wobei die ersten mit einer ionischen Polypyridinflüssigkeit beladenen porösen Mikrokügelchen eine ionische Polypyridinflüssigkeit umfassen und eine Strukturformel der ionischen Polypyridinflüssigkeit in Formel (3) gezeigt ist, 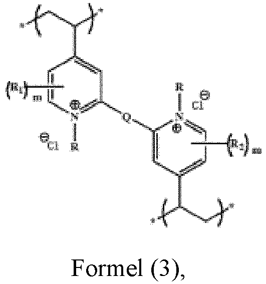 wobei in Formel (3) R ausgewählt ist aus einer C₁-C₁₀-Alkylgruppe mit linearer Kette oder einer C₁-C₁₀-Alkylgruppe mit verzweigter Kette, wobei R1 und R2 unabhängig voneinander ausgewählt sind aus Wasserstoffatomen, Halogenatomen, C₁-C₁₀-Alkylgruppe, C₁-C₁₀-Alkoxygruppe, C₁-C₁₀-Alkanoylgruppe, Arylgruppe, Heteroarylgruppe, Cyanogruppe oder Nitrogruppe, m eine ganze Zahl im Bereich von 0 bis 3 ist und Q eine direkte Bindung oder eine zweiwertige Verbindungsgruppe ist.

3. Verfahren nach Anspruch 2, wobei Q ausgewählt ist aus 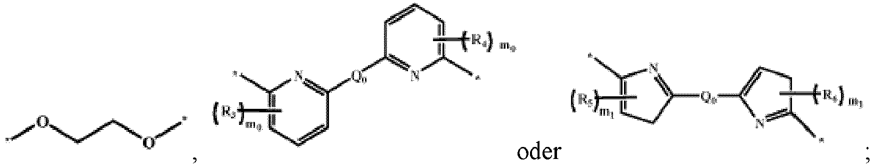 wobei R₃, R₄, R₅ und Re unabhängig voneinander aus Wasserstoffatomen, Halogenatomen, C₁-C₁₀-Alkylgruppen, C₁-C₁₀-Alkoxygruppen, C₁-C₁₀-Alkanoylgruppen, Arylgruppen, Heteroarylgruppen, Cyanogruppen oder Nitrogruppen ausgewählt sind, wobei Q₀ aus einer direkten Bindung oder einer zweiwertigen Verbindungsgruppe ausgewählt ist, m₀ eine Ganzzahl im Bereich von 0 bis 3 ist und m₁ eine Ganzzahl im Bereich von 0 bis 2 ist.

4. Verfahren nach Anspruch 3, wobei Q₀ ausgewählt ist aus 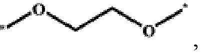 **-(CH₂)n₁-**, **-(CH₂O)n₂-**, einer substituierten Arylgruppe oder eiuner unsubstituierten Arylgruppe und n₁ und n₂ unabhängig voneinander aus ganzen Zahlen im Bereich von 1 bis 50 ausgewählt werden.

5. Verfahren nach einem der Ansprüche 1 bis 4, wobei die ersten mit Polypyridin-Ionenflüssigkeit beladenen porösen Mikrokügelchen poröse Polystyrol-Mikrokügelchen umfassen, die Partikelgrößen der Polystyrol-Mikrokügelchen in einem Bereich von 50 nm bis 100 nm liegen und eine relative Abweichung der Partikelgrößen weniger als 3 % beträgt, oder
eine BET-spezifische Oberfläche der ersten mit ionischer Polypyridinflüssigkeit beladenen porösen Mikrokügelchen in einem Bereich von 50 m²/g bis 500 m²/g liegt und eine durchschnittliche Öffnungsgröße der Öffnungen in den ersten mit ionischer Polypyridinflüssigkeit beladenen porösen Mikrokügelchen in einem Bereich von 10 nm bis 50 nm liegt.

6. Verfahren nach einem der Ansprüche 1 bis 4, wobei in Formel (1) eine Strukturformel der substituierten Aryloxygruppen ist 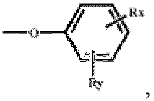 wobei Rx und Ry unabhängig voneinander ausgewählt sind aus Wasserstoffatomen, Halogenatomen, Nitrilgruppe, C₁-C₁₀-Alkylgruppe, C₁-C₁₀-Alkoxygruppe, C₁-C₁₀-Alkanoylgruppe, C₁-C₁₀-Estergruppe, C₁-C₁₀-Sulfonatgruppe, Vinylgruppe, Propenylgruppe, Acryloylgruppe, Acrylatgruppe oder Methacryloylgruppe.

7. Verfahren nach Anspruch 6, wobei, wenn sowohl X als auch Y ausgewählt sind aus 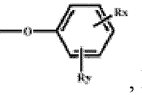 X und Y nicht zyklisiert sind, oder
wenn sowohl X als auch Y aus stickstoffhaltigen heterocyclischen Gruppen ausgewählt sind, X und Y nicht zyklisiert sind oder X und Y über eine Einfachbindung oder Methylen zyklisiert sind; oder
wenn X ausgewählt ist aus 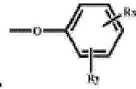 und Y aus stickstoffhaltigen heterozyklischen Gruppen ausgewählt ist, X und Y über Methylen zyklisiert sind.

8. Verfahren nach Anspruch 7, wobei die stickstoffhaltigen heterocyclischen Gruppen ausgewählt sind 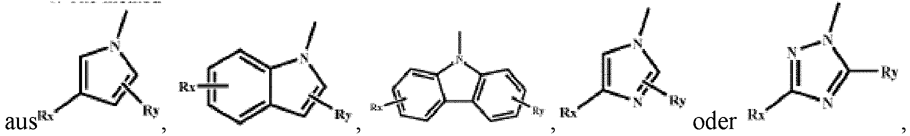 wobei Rx und Ry unabhängig voneinander aus Wasserstoffatomen, Halogenatomen, Nitrilgruppen, C₁-C₁₀-Alkylgruppen, C₁-C₁₀-Alkoxygruppen, C₁-C₁₀-Alkanoylgruppen, C₁-C₁₀-Estergruppen, C1-C10-Sulfonatgruppen, Vinylgruppen, Propenylgruppen, Acryloylgruppen, Acrylatgruppen oder Methacryloylgruppen ausgewählt sind.

9. Verfahren nach Anspruch 8, wobei sowohl X als auch Y aus stickstoffhaltigen heterozyklischen Gruppen ausgewählt sind und X und Y über die Einfachbindung oder das Methylen zyklisiert werden, um eine Struktur zu bilden, die aus einer der folgenden Gruppen ausgewählt ist: 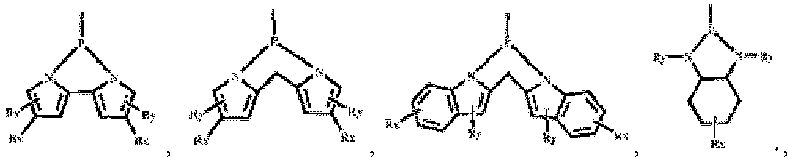 oder

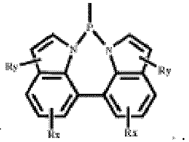

10. Verfahren nach einem der Ansprüche 1 bis 4, wobei in Formel (2) Z ausgewählt ist aus 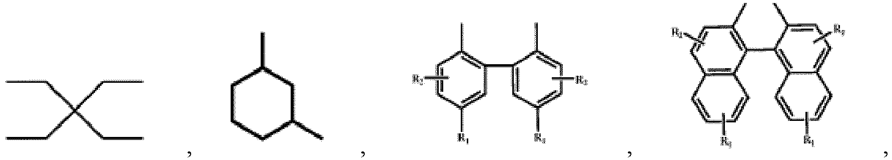 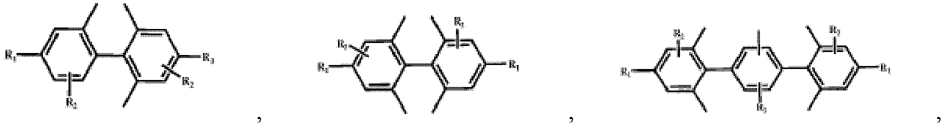 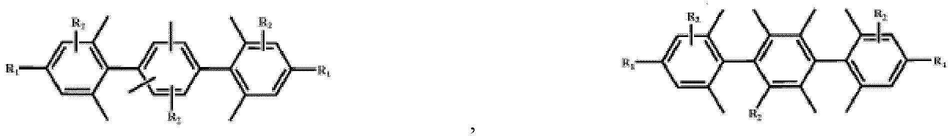 oder 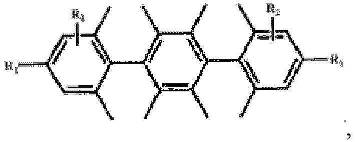
wobei R1 und R2 unabhängig voneinander ausgewählt sind aus Wasserstoffatomen, Halogenatomen, Nitrilgruppe, C₁-C₁₀-Alkylgruppe, C₁-C₁₀-Alkoxygruppe, C₁-C₁₀-Alkanoylgruppe, C₁-C₁₀-Estergruppe, C₁-C₁₀-Sulfonatgruppe, Vinylgruppe, Propenylgruppe, Acryloylgruppe, Acrylatgruppe oder Methacryloylgruppe, oder
n eine ganze Zahl im Bereich von 2 bis 4 ist.

11. Verfahren nach einem der Ansprüche 1 bis 4, wobei im Schritt des Mischens der ersten Mischung mit der zweiten Mischung in der Reaktionsvorrichtung zum Erhalten der Reaktionsmischung ein Molverhältnis der Phosphorchloridverbindung zu der in Formel (2) gezeigten Verbindung in einem Bereich von 1,0:(1/x) bis 1,3:(1/x) liegt, x in Formel (2) gleich n ist und ein Molverhältnis von Stickstoffatomen in den ersten mit Polypyridin-Ionenflüssigkeit beladenen porösen Mikrokügelchen zu Hydroxylgruppen in der in Formel (2) gezeigten Verbindung in einem Bereich von 0,01:1 bis 0,1:1 liegt, oder
eine Molkonzentration der Phosphorchloridverbindung in der ersten Mischung in einem Bereich von 0,05 Mol/l bis 5,0 Mol/l liegt und eine Molkonzentration der in Formel (2) gezeigten Verbindung in der zweiten Mischung in einem Bereich von 0,05 Mol/l bis 5,0 Mol/l liegt.

12. Verfahren nach einem der Ansprüche 1 bis 4, wobei im Schritt des Mischens der ersten Mischung mit der zweiten Mischung in der Reaktionsvorrichtung, um die erste Mischung mit der zweiten Mischung reagieren zu lassen, um so die Reaktionsmischung zu erhalten, eine Reaktionstemperatur in einem Bereich von 0 bis 50 Grad Celsius liegt und eine Reaktionszeit in einem Bereich von 1 Stunde bis 5 Stunden liegt.

13. Verfahren nach einem der Ansprüche 1 bis 4, wobei im Schritt des Mischens der ersten Mischung mit der zweiten Mischung in der Reaktionsvorrichtung, um die erste Mischung mit der zweiten Mischung reagieren zu lassen, um so die Reaktionsmischung zu erhalten, die zweite Mischung chargenweise in die erste Mischung gegeben wird, oder
im Schritt des chargenweisen Hinzufügens der zweiten Mischung zu der ersten Mischung liegt die Dauer des Hinzufügens im Bereich von 2 Stunden bis 10 Stunden liegt.

14. Verfahren nach einem der Ansprüche 1 bis 4, wobei der Schritt des Filtrierens des Reaktionsgemisches zum Erhalten der Filterflüssigkeit nach der Reaktion außerdem das Rückgewinnen von zweiten mit ionischer Polypyridinflüssigkeit beladenen porösen Mikrokügelchen umfasst, und
nach der Rückgewinnung der zweiten mit ionischer Polypyridinflüssigkeit beladenen porösen Mikrokügelchen, weiterhin umfassend einen Schritt des Waschens, Trocknens und Wiederverwendens der zurückgewonnenen zweiten mit ionischer Polypyridinflüssigkeit beladenen porösen Mikrokügelchen zur Zubereitung der ersten Mischung.

15. Verfahren nach einem der Ansprüche 1 bis 4, wobei der Schritt des Mischens der ersten Mischung mit der zweiten Mischung in der Reaktionsvorrichtung, um die erste Mischung mit der zweiten Mischung reagieren zu lassen, um so die Reaktionsmischung zu erhalten, ferner das Einblasen eines Schutzgases in die Reaktionsvorrichtung umfasst, um den erzeugten Chlorwasserstoff aus der Reaktionsvorrichtung zu entfernen.

## Revendications

1. Un procédé pour préparer un ligand contenant du phosphore, comprenant :
mélanger un composé de chlorure de phosphore tel que représenté à la Formule (1), des premières microsphères poreuses à charge liquide de polypyridine ionique avec un premier solvant organique pour obtenir un premier mélange, et mélanger le composé représenté à la Formule (2) avec un deuxième solvant organique pour obtenir un deuxième mélange ; et
mélanger le premier mélange avec le deuxième mélange dans un dispositif de réaction afin de faire réagir le premier mélange avec le deuxième mélange pour obtenir un mélange réactionnel, éliminer le chlorure d'hydrogène généré du dispositif de réaction, filtrer le mélange réactionnel pour obtenir un filtre de liqueur après la réaction du premier mélange et du deuxième mélange, et traiter le filtre de liqueur pour obtenir le ligand contenant du phosphore, 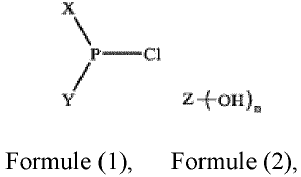
dans lequel dans la Formule (1), X et Y sont sélectionnés indépendamment parmi des groupes aryloxy substitués ou des groupes hétérocycliques contenant de l'azote,
dans la Formule (2), Z est un groupe hydrocarbure aliphatique multivalent ou un groupe hydrocarbure aromatique multivalent comprenant au moins un groupe substituant,
dans lequel le au moins un groupe substituant est sélectionné parmi des atomes d'hydrogène, des atomes d'halogène, un groupe alkyle C₁-C₁₀, un groupe alcoxy C₁-C₁₀, un groupe alcanoyle C₁-C₁₀, un groupe aryle, un groupe hétéroaryle, un groupe cyano, ou un groupe nitro, et n est un entier compris entre 1 et 8.

2. Un procédé selon la revendication 1, dans lequel les premières microsphères poreuses à charge liquide de polypyridine ionique comprennent un liquide de polypyridine ionique, et la formule structurelle du liquide de polypyridine ionique est représentée à la Formule (3), 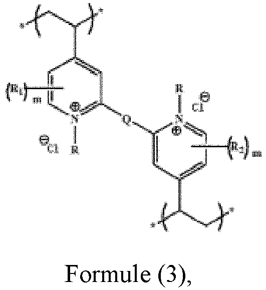 dans lequel dans la Formula (3), R est sélectionné parmi un groupe alkyle à chaîne linéaire C₁-C₁₀ ou un groupe alkyle à chaîne ramifiée C₁-C₁₀, dans lequel R₁ et R₂ sont sélectionnés indépendamment parmi des atomes d'hydrogène, des atomes d'halogène, un groupe alkyle C₁-C₁₀, un groupe alcoxy C₁-C₁₀, un groupe alcanoyle C₁-C₁₀, un groupe aryle, un groupe hétéroaryle, un groupe cyano, ou un groupe nitro, m est un entier compris entre 0 et 3, et Q est une liaison directe ou un groupe divalent de jonction.

3. Un procédé selon la revendication 2, dans lequel Q est sélectionné parmi 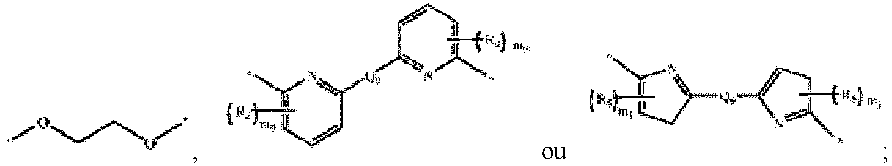 dans lequel R₃, R₄, R₅, et Re sont sélectionnés indépendamment parmi des atomes d'hydrogène, des atomes d'halogène, un groupe alkyle C₁-C₁₀, un groupe alcoxy C₁-C₁₀, un groupe alcanoyle C₁-C₁₀, un groupe aryle, un groupe hétéroaryle, un groupe cyano, ou un groupe nitro, dans lequel Q₀ est sélectionné entre une liaison directe ou un groupe divalent de jonction, m₀ est un entier compris entre 0 et 3, et m₁ est un entier compris entre 0 et 2.

4. Un procédé selon la revendication 3, dans lequel Q₀ est sélectionné parmi 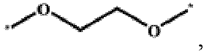 **-(CH₂)n₁-**, **-(CH₂O)n₂-**, un groupe aryle substitué, ou un groupe aryle non substitué, et n₁ et n₂ sont sélectionnés indépendamment parmi des entiers compris entre 1 et 50.

5. Un procédé selon l'une quelconque des revendications 1 à 4, dans lequel les premières microsphères poreuses à charge liquide de polypyridine ionique comprennent des microsphères poreuses de polystyrène, les tailles des particules des microsphères de polystyrène sont comprises entre 50 nm et 100 nm, et l'écart relatif de taille des particules est inférieur à 3%, ou,
la surface spécifique BET des premières microsphères poreuses à charge liquide de polypyridine ionique est comprise entre 50m²/g et 500m²/g, et la taille moyenne d'ouverture des premières microsphères poreuses à charge liquide de polypyridine ionique est comprise entre 10 nm et 50 nm.

6. Un procédé selon l'une quelconque des revendications 1 à 4, dans lequel dans la Formule (1), la formule structurelle des groupes aryloxy substitués est 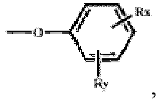 dans lequel Rx et Ry sont sélectionnés indépendamment parmi des atomes d'hydrogène, des atomes d'halogène, un groupe nitrile, un groupe alkyle C₁-C₁₀, un groupe alcoxy C₁-C₁₀, un groupe alcanoyle C₁-C₁₀, un groupe ester C₁-C₁₀, un groupe sufonate C₁-C₁₀, un groupe vinyle, un groupe propényle, un groupe acryloyle, un groupe acrylate group, ou un groupe méthacryloyle.

7. Un procédé selon la revendication 6, dans lequel lorsque X et Y sont tous deux sélectionnés parmi 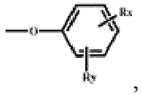 X et Y ne sont pas cyclisés ; ou,
lorsque X et Y sont tous deux sélectionnés parmi des groupes hétérocycliques contenant de l'azote, X et Y ne sont pas cyclisés, ou X et Y sont cyclisés via une liaison unique ou le méthylène ; ou,
lorsque X est sélectionné parmi 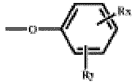 et Y est sélectionné parmi des groupes hétérocylciques contenant de l'azote, X et Y sont cyclisés via méthylène.

8. Un procédé selon la revendication 7, dans lequel les groupes hétérocycliques contenant de l'azote sont sélectionnés parmi 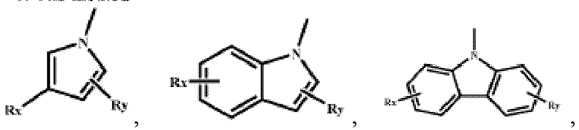 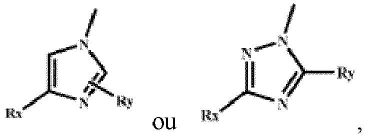 dans lequel Rx et Ry sont sélectionnés indépendamment parmi des atomes d'hydrogène, des atomes d'halogène, un groupe nitrile, un groupe alkyle C₁-C₁₀, un groupe alcoxy C₁-C₁₀, un groupe alcanoyle C₁-C₁₀, un groupe ester C₁-C₁₀, un groupe sufonate C₁-C₁₀, un groupe vinyle, un groupe propényle, un groupe acryloyle, un groupe acrylate group, ou un groupe méthacryloyle.

9. Un procédé selon la revendication 8, dans lequel X et Y sont tous deux sélectionnés parmi des groupes hétérocycliques contenant de l'azote, et X et Y sont cyclisés via la liaison unique ou le méthylène pour former une structure quelconque sélectionnée parmi un groupe consistant en 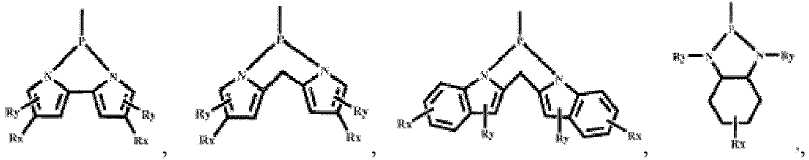 ou

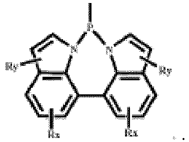

10. Un procédé selon l'une quelconque des revendications 1 à 4, dans lequel dans la Formule (2), Z est sélectionné parmi 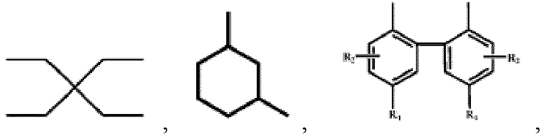 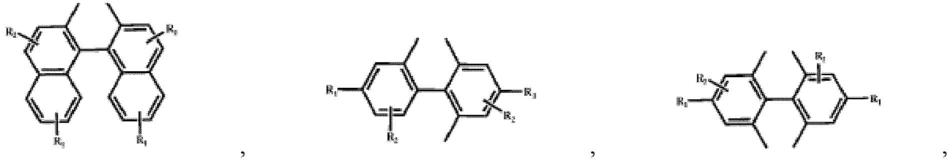 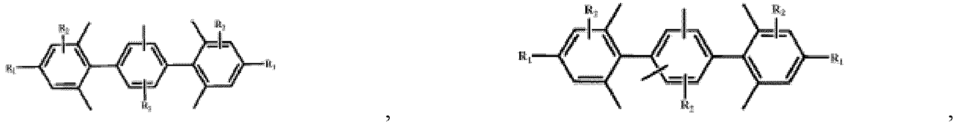 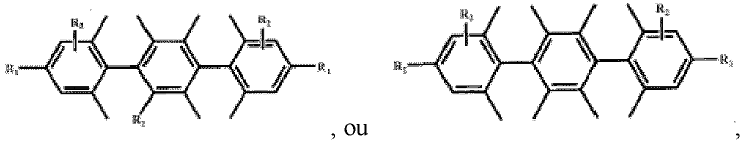
dans lequel R₁ et R₂ sont sélectionnés indépendamment parmi des atomes d'hydrogène, des atomes d'halogène, un groupe nitrile, un groupe alkyle C₁-C₁₀, un groupe alcoxy C₁-C₁₀, un groupe alcanoyle C₁-C₁₀, un groupe ester C₁-C₁₀, un groupe sufonate C₁-C₁₀, un groupe vinyle, un groupe propényle, un groupe acryloyle, un groupe acrylate group, ou un groupe méthacryloyle, ou,
n est un entier compris entre 2 et 4.

11. Un procédé selon l'une quelconque des revendications 1 à 4, dans lequel à l'étape de mélange du premier mélange avec le deuxième mélange dans le dispositif de réaction pour obtenir le mélange réactionnel, le rapport molaire du composé de chlorure de phosphore au composé représenté à la Formule (2) est compris entre 1,0 : (1/x) et 1,3 : (1/x), x est égal à n dans la Formule (2), et le rapport molaire des atomes d'azote dans les premières microsphères poreuses à charge liquide de polypyridine ionique aux groupes hydroxyles dans le composé représenté à la Formule (2) est compris entre 0,01 : 1 et 0,1 : 1, ou,
la concentration molaire du composé de chlorure de phosphore dans le premier mélange est comprise entre 0,05 mol/L et 5,0 mol/L, et la concentration molaire du composé représenté à la Formule (2) dans le deuxième mélange est comprise entre 0,05 mol/L et 5,0 mol/L.

12. Un procédé selon l'une quelconque des revendications 1 à 4, dans lequel à l'étape de mélange du premier mélange avec le deuxième mélange dans le dispositif de réaction afin que le premier mélange réagisse avec le deuxième mélange pour obtenir le mélange réactionnel, la température de réaction est comprise entre 0 et 50 degrés centigrades, et le temps de réaction est compris entre 1 heure et 5 heures.

13. Un procédé selon l'une quelconque des revendications 1 à 4, dans lequel à l'étape de mélange du premier mélange avec le deuxième mélange dans le dispositif de réaction afin que le premier mélange réagisse avec le deuxième mélange pour obtenir le mélange réactionnel, le deuxième mélange est ajouté dans le premier mélange par lots, ou,
à l'étape de mélange du premier mélange avec le deuxième mélange par lots, la durée de l'ajout est comprise entre 2 heures et 10 heures.

14. Un procédé selon l'une quelconque des revendications 1 à 4, dans lequel l'étape de filtration du mélange réactionnel pour obtenir la liqueur de filtre après la réaction comprend en outre la récupération des deuxièmes microsphères poreuses à charge liquide de polypyridine ionique, et,
après la récupération des deuxièmes microsphères poreuses à charge liquide de polypyridine ionique, comprend en outre une étape de lavage, séchage et ré-utilisation des deuxièmes microsphères poreuses à charge liquide de polypyridine ionique récupérées pour préparer le premier mélange.

15. Un procédé selon l'une quelconque des revendications 1 à 4, dans lequel l'étape de mélange du premier mélange avec le deuxième mélange dans le dispositif de réaction afin que le premier mélange réagisse avec le deuxième mélange pour obtenir le premier mélange réactionnel comprend en outre le soufflage d'un gaz protecteur dans le dispositif de réaction afin d'évacuer du dispositif de réaction le chlorure d'hydrogène généré.
